# EUROPEAN PATENT APPLICATION

(11) **EP 4 783 682 A1**
(43) Date of publication of application: **29.07.2026**
(21) Application number: 24884441.7
(22) Date of filing: 17.10.2024
(51) Int. Cl.: H04W 52/14

(54) **RANDOM ACCESS METHOD AND RELATED APPARATUS**

(30) Priority: 31.10.2023 CN 202311437985
(71) Applicant: HUAWEI TECHNOLOGIES CO., LTD., Shenzhen 518129 (CN)
(72) Inventor: FAN, Bo, Shenzhen, Guangdong 518129 (CN)
(74) Representative: Roth, Sebastian
(86) International application number: PCT/CN2024/125403
(87) International publication number: WO 2025/092437

(57) **Abstract**

This application provides a random access method and a related apparatus, so that a terminal device selects an appropriate path loss to send a random access request, to enable obtaining of a timing advance TA value in a multi-transmission and reception point TRP transmission mode. The method provided in this application includes: A terminal device receives a physical downlink control channel PDCCH from a network device, where the PDCCH is for triggering a random access procedure between the terminal device and the network device. The terminal device determines, based on first information on the PDCCH, a path loss corresponding to a first path loss resource or a path loss corresponding to a second path loss resource, where the first path loss resource is a quasi-colocation QCL resource in a transmission configuration indicator TCI state used for the PDCCH, and the second path loss resource is a synchronization signal block SSB resource indicated on the PDCCH. The terminal device sends the random access request to the network device based on the path loss corresponding to the first path loss resource or the path loss corresponding to the second path loss resource.

## Description

This application claims priority to Chinese Patent Application No. 202311437985.X, filed with the China National Intellectual Property Administration on October 31, 2023 and entitled "RANDOM ACCESS METHOD AND RELATED APPARATUS", which is incorporated herein by reference in its entirety.

### TECHNICAL FIELD

This application relates to the field of communication technologies, and in particular, to a random access method and a related apparatus.

### BACKGROUND

A timing advance (timing advance, TA) value is used by a terminal device for uplink transmission, and specifically refers to an amount of time by which an uplink frame in which the terminal device sends uplink data is advanced relative to a downlink frame in which the terminal device receives downlink data. The TA value may be obtained through a random access (random access channel, RACH) procedure.

Specifically, a network device sends a physical downlink control channel (physical downlink control channel, PDCCH) to the terminal device, where the PDCCH indicates the terminal device to initiate the random access procedure. The terminal device sends a random access request to the network device. Then, the network device obtains the TA value through calculation based on time at which the random access request is received. The network device sends a random access response to the terminal device, where the random access response includes the TA value, so that the terminal device obtains the TA value.

However, the foregoing technical solution is applicable to a single-transmission and reception point (transmission and reception point, TRP) transmission mode, and cannot be applicable to a multi-TRP transmission mode. For example, in the multi-TRP transmission mode, the network device sends the PDCCH to the terminal device, to trigger the terminal device to initiate the random access request. However, there are a plurality of TRPs in the multi-TRP transmission mode, and the terminal device cannot learn of a TRP to which the random access request should be sent. Therefore, the terminal device cannot send the random access request based on a correct path loss. Consequently, the terminal device cannot obtain the TA value in the multi-TRP transmission mode.

### SUMMARY

This application provides a random access method and a related apparatus, so that a terminal device selects an appropriate path loss to send a random access request, to enable obtaining of a TA value in a multi-TRP transmission mode.

A first aspect of this application provides a random access method. The method is performed by a terminal device. The terminal device may be a device or an apparatus with a chip, a device or an apparatus integrated with a circuit, or a chip, a chip system, a module, or a control unit in the foregoing device or apparatus. This is not specifically limited in this application. It should be noted that, in this application, reference to the terminal device may mean the terminal device, or may mean a chip, a functional module, an integrated circuit, or the like that is in the terminal device and that completes the method provided in this application. This is not specifically limited in this application. In the first aspect and possible implementations thereof, an example in which the method is performed by the terminal device is used for description. The method provided in this application includes:

The terminal device receives a PDCCH from a network device, where the PDCCH is for triggering a random access procedure between the terminal device and the network device. The terminal device determines, based on first information on the PDCCH, a path loss corresponding to a first path loss resource or a path loss corresponding to a second path loss resource, where the first path loss resource is a quasi-colocation (quasi-colocation, QCL) resource in a transmission configuration indicator (transmission configuration indicator, TCI) state used for the PDCCH, and the second path loss resource is a synchronization signal (synchronization signal) and physical broadcast channel (physical broadcast channel, PBCH) block (synchronization signal and PBCH block, SS/PBCH block) resource, briefly referred to as a synchronization signal block (synchronization signal block, SSB) resource, indicated on the PDCCH. The terminal device sends a random access request to the network device based on the path loss corresponding to the first path loss resource or the path loss corresponding to the second path loss resource. In this way, the terminal device selects an appropriate path loss to send the random access request, to enable obtaining of a TA value in a multi-TRP transmission mode. Optionally, the first information is for determining the first path loss resource or the second path loss resource, or the first information is for determining the path loss corresponding to the first path loss resource or the path loss corresponding to the second path loss resource.

A second aspect of this application provides a random access method. The method is performed by a network device. The network device may be a device or an apparatus with a chip, a device or an apparatus integrated with a circuit, or a chip, a chip system, a module, or a control unit in the foregoing device or apparatus. This is not specifically limited in this application. It should be noted that, in this application, reference to the network device may mean the network device, or may mean a chip, a functional module, an integrated circuit, or the like that is in the network device and that completes the method provided in this application. This is not specifically limited in this application. In the second aspect and possible implementations thereof, an example in which the method is performed by the network device is used for description. The method provided in this application includes:

The network device sends a PDCCH to a terminal device, where the PDCCH is for triggering a random access procedure between the terminal device and the network device. The network device receives a random access request from the terminal device, where the random access request is sent based on a path loss corresponding to a first path loss resource or a path loss corresponding to a second path loss resource, where the path loss corresponding to the first path loss resource or the path loss corresponding to the second path loss resource is determined based on first information on the PDCCH, the first path loss resource is a QCL resource in a TCI state used for the PDCCH, and the second path loss resource is an SSB resource indicated on the PDCCH. In this way, the terminal device selects an appropriate path loss to send the random access request, to enable obtaining of a TA value in a multi-TRP transmission mode.

Based on the first aspect or the second aspect, in a possible implementation, the first information is a first field on the PDCCH. In this way, the terminal device selects, based on the first field, the appropriate path loss to send the random access request, to enable obtaining of the TA value in the multi-TRP transmission mode.

Based on the first aspect or the second aspect, in a possible implementation, the first field indicates a timing advance group (timing advance group, TAG); and if the TAG indicated by the first field is the same as a TAG associated with the TCI state used for the PDCCH, the random access request is sent based on the path loss corresponding to the first path loss resource; or if the TAG indicated by the first field is different from a TAG associated with the TCI state used for the PDCCH, the random access request is sent based on the path loss corresponding to the second path loss resource. In this implementation, the terminal device may determine, in an implicit manner (that is, through TAG comparison), a TRP to which the random access procedure triggered by using the PDCCH is specific, so that the terminal device determines the appropriate path loss, and sends the random access request based on the path loss, to implement a TRP-specific random access procedure. For example, if the TAG indicated by the first field is the same as the TAG associated with the TCI state used for the PDCCH, it can be learned that the TRP to which the random access procedure triggered by using the PDCCH is specific is the same as a TRP for sending the PDCCH, which means an intra-cell multi-TRP transmission mode. In this case, the terminal device sends the random access request based on the path loss corresponding to the first path loss resource. If the TAG indicated by the first field is different from the TAG associated with the TCI state used for the PDCCH, it can be learned that the TRP to which the random access procedure triggered by using the PDCCH is specific is different from a TRP for sending the PDCCH, which means an inter-cell multi-TRP transmission mode. In this case, the terminal device sends the random access request based on the path loss corresponding to the second path loss resource. Optionally, the TAG indicated by the first field is a TAG corresponding to the random access procedure triggered by using the PDCCH or a TAG corresponding to the TRP corresponding to the random access procedure triggered by using the PDCCH. Optionally, this implementation may alternatively be described as follows: The first field indicates whether the TAG corresponding to the random access procedure triggered by using the PDCCH is the same as the TAG associated with the TCI state used for the PDCCH; and if the TAGs are the same, the random access request is sent based on the path loss corresponding to the first path loss resource; or if the TAGs are different, the random access request is sent based on the path loss corresponding to the second path loss resource.

Based on the first aspect, in a possible implementation, the method further includes: The terminal device receives a random access response from the network device, where the random access response includes a second field, the second field indicates a TAG corresponding to a TA value carried in the random access response, and the TAG indicated by the second field is the same as the TAG indicated by the first field. In this way, a case in which the TAGs corresponding to the random access procedure are different is avoided, and the TAGs corresponding to the random access procedure are aligned.

Based on the second aspect, in a possible implementation, the method further includes: The network device sends a random access response to the terminal device, where the random access response includes a second field, the second field indicates a TAG corresponding to a TA value carried in the random access response, and the TAG indicated by the second field is the same as the TAG indicated by the first field. In this way, a case in which the TAGs corresponding to the random access procedure are different is avoided, and the TAGs corresponding to the random access procedure are aligned.

Based on the first aspect or the second aspect, in a possible implementation, the first field indicates a control channel group identifier; and if the control channel group identifier indicated by the first field is the same as a control channel group identifier corresponding to the PDCCH, the random access request is sent based on the path loss corresponding to the first path loss resource; or if the control channel group identifier indicated by the first field is different from a control channel group identifier corresponding to the PDCCH, the random access request is sent based on the path loss corresponding to the second path loss resource. In this implementation, the terminal device may determine, in an implicit manner (that is, through control channel group identifier comparison), a TRP to which the random access procedure triggered by using the PDCCH is specific, so that the terminal device determines the appropriate path loss, and sends the random access request based on the path loss, to implement a TRP-specific random access procedure. For example, if the control channel group identifier indicated by the first field is the same as the control channel group identifier corresponding to the PDCCH, it can be learned that the TRP to which the random access procedure triggered by using the PDCCH is specific is the same as a TRP for sending the PDCCH, which means an intra-cell multi-TRP transmission mode. In this case, the terminal device sends the random access request based on the path loss corresponding to the first path loss resource. If the control channel group identifier indicated by the first field is different from the control channel group identifier corresponding to the PDCCH, it can be learned that the TRP to which the random access procedure triggered by using the PDCCH is specific is different from a TRP for sending the PDCCH, which means an inter-cell multi-TRP transmission mode. In this case, the terminal device sends the random access request based on the path loss corresponding to the second path loss resource. Optionally, the control channel group identifier indicated by the first field is a control channel group identifier corresponding to the random access procedure triggered by using the PDCCH or a control channel group identifier corresponding to the TRP corresponding to the random access procedure triggered by using the PDCCH. Optionally, this implementation may alternatively be described as follows: The first field indicates whether the control channel group identifier corresponding to the random access procedure triggered by using the PDCCH is the same as the control channel group identifier corresponding to the PDCCH; and if the control channel group identifiers are the same, the random access request is sent based on the path loss corresponding to the first path loss resource; or if the control channel group identifiers are different, the random access request is sent based on the path loss corresponding to the second path loss resource.

Based on the first aspect, in a possible implementation, the method further includes: The terminal device receives a random access response from the network device, where the random access response includes a second field, and the second field indicates a TAG corresponding to a TA value carried in the random access response message, where if the control channel group identifier indicated by the first field is the same as the control channel group identifier corresponding to the PDCCH, the TAG indicated by the second field is the same as a TAG associated with the TCI state used for the PDCCH; or if the control channel group identifier indicated by the first field is different from the control channel group identifier corresponding to the PDCCH, the TAG indicated by the second field is different from a TAG associated with the TCI state used for the PDCCH. In this implementation, if the control channel group identifier indicated by the first field is the same as the control channel group identifier corresponding to the PDCCH, it can be learned that the TRP to which the random access procedure triggered by using the PDCCH is specific is the same as the TRP for sending the PDCCH, which means the intra-cell multi-TRP transmission mode. The TAG indicated by the second field should be the same as the TAG associated with the TCI state used for the PDCCH. In this way, a case in which the TAGs corresponding to the random access procedure are different is avoided, and the TAGs corresponding to the random access procedure are aligned. If the control channel group identifier indicated by the first field is different from the control channel group identifier corresponding to the PDCCH, it can be learned that the TRP to which the random access procedure triggered by using the PDCCH is specific is different from the TRP for sending the PDCCH, which means the inter-cell multi-TRP transmission mode. The TAG indicated by the second field should be different from the TAG associated with the TCI state used for the PDCCH. In this way, different TRPs correspond to different TAGs.

Based on the second aspect, in a possible implementation, the method further includes: The network device sends a random access response to the terminal device, where the random access response includes a second field, and the second field indicates a TAG corresponding to a TA value carried in the random access response message, where if the control channel group identifier indicated by the first field is the same as the control channel group identifier corresponding to the PDCCH, the TAG indicated by the second field is the same as a TAG associated with the TCI state used for the PDCCH; or if the control channel group identifier indicated by the first field is different from the control channel group identifier corresponding to the PDCCH, the TAG indicated by the second field is different from a TAG associated with the TCI state used for the PDCCH. In this implementation, if the control channel group identifier indicated by the first field is the same as the control channel group identifier corresponding to the PDCCH, it can be learned that the TRP to which the random access procedure triggered by using the PDCCH is specific is the same as the TRP for sending the PDCCH, which means the intra-cell multi-TRP transmission mode. The TAG indicated by the second field should be the same as the TAG associated with the TCI state used for the PDCCH. In this way, a case in which the TAGs corresponding to the random access procedure are different is avoided, and the TAGs corresponding to the random access procedure are aligned. If the control channel group identifier indicated by the first field is different from the control channel group identifier corresponding to the PDCCH, it can be learned that the TRP to which the random access procedure triggered by using the PDCCH is specific is different from the TRP for sending the PDCCH, which means the inter-cell multi-TRP transmission mode. The TAG indicated by the second field should be different from the TAG associated with the TCI state used for the PDCCH. In this way, different TRPs correspond to different TAGs.

Based on the first aspect or the second aspect, in a possible implementation, the first field indicates that the random access procedure is a first-type random access procedure or a second-type random access procedure; and if the random access procedure is the first-type random access procedure, the random access request is sent based on the path loss corresponding to the first path loss resource; or if the random access procedure is the second-type random access procedure, the random access request is sent based on the path loss corresponding to the second path loss resource. In this implementation, the terminal device may determine, in an explicit manner (by indicating a type of the random access procedure), a TRP to which the random access procedure triggered by using the PDCCH is specific, so that the terminal device determines the appropriate path loss, and sends the random access request based on the path loss, to implement a TRP-specific random access procedure. For example, if the random access procedure is the first-type random access procedure, it may be understood as an intra-cell multi-TRP transmission mode. In this case, the terminal device sends the random access request based on the path loss corresponding to the first path loss resource. If the random access procedure is the second-type random access procedure, it may be understood as an inter-cell multi-TRP transmission mode. In this case, the terminal device sends the random access request based on the path loss corresponding to the second path loss resource. In this way, the terminal device selects the appropriate path loss to send the random access request.

Based on the first aspect or the second aspect, in a possible implementation, the first-type random access procedure includes: a random access procedure corresponding to a TRP that is the same as a TRP for sending the PDCCH, where in other words, the TRP corresponding to the first-type random access procedure is the same as the TRP for sending the PDCCH; or in other words, if the TRP corresponding to the random access procedure is the same as the TRP for sending the PDCCH, the random access procedure is the first-type random access procedure; and in this way, the first-type random access procedure is defined from a perspective of a TRP;
or
a random access procedure corresponding to a TAG that is the same as a TAG associated with the TCI state used for the PDCCH, where in other words, the TAG corresponding to the first-type random access procedure is the same as the TAG associated with the TCI state used for the PDCCH; or in other words, if the TAG corresponding to the random access procedure is the same as the TAG associated with the TCI state used for the PDCCH, the random access procedure is the first-type random access procedure; and in this way, the first-type random access procedure is defined from a perspective of a TAG;
   or
a random access procedure corresponding to a control channel group identifier that is the same as a control channel group identifier corresponding to the PDCCH, where in other words, the control channel group identifier corresponding to the first-type random access procedure is the same as the control channel group identifier corresponding to the PDCCH; or if the control channel group identifier corresponding to the random access procedure is the same as the control channel group identifier corresponding to the PDCCH, the random access procedure is the first-type random access procedure; and in this way, the first-type random access procedure is defined from a perspective of a control channel group identifier.

Based on the first aspect or the second aspect, in a possible implementation, the second-type random access procedure includes: a random access procedure corresponding to a TRP that is different from a TRP for sending the PDCCH, where in other words, the TRP corresponding to the second-type random access procedure is the same as the TRP for sending the PDCCH; or in other words, if the TRP corresponding to the random access procedure is different from the TRP for sending the PDCCH, the random access procedure is the second-type random access procedure; and in this way, the second-type random access procedure is defined from a perspective of a TRP;
or
a random access procedure corresponding to a TAG that is different from a TAG associated with the TCI state used for the PDCCH, where in other words, the TAG corresponding to the second-type random access procedure is the same as the TAG associated with the TCI state used for the PDCCH; or in other words, if the TAG corresponding to the random access procedure is different from the TAG associated with the TCI state used for the PDCCH, the random access procedure is the second-type random access procedure; and in this way, the second-type random access procedure is defined from a perspective of a TAG;
   or
a random access procedure corresponding to a control channel group identifier that is different from a control channel group identifier corresponding to the PDCCH, where in other words, the control channel group identifier corresponding to the second-type random access procedure is different from the control channel group identifier corresponding to the PDCCH; or in other words, if the control channel group identifier corresponding to the random access procedure is different from the control channel group identifier corresponding to the PDCCH, the random access procedure is the second-type random access procedure; and in this way, the second-type random access procedure is defined from a perspective of a control channel group identifier.

Based on the first aspect, in a possible implementation, the method further includes: The terminal device receives a random access response from the network device, where the random access response includes a second field, and the second field indicates a TAG corresponding to a TA value carried in the random access response, where if the random access procedure is the first-type random access procedure, the TAG indicated by the second field is the same as the TAG associated with the TCI state used for the PDCCH, to avoid a case in which the TAGs corresponding to the random access procedure are different, and align the TAGs corresponding to the random access procedure; or if the random access procedure is the second-type random access procedure, the TAG indicated by the second field is different from the TAG associated with the TCI state used for the PDCCH. In this way, different TRPs correspond to different TAGs.

Based on the second aspect, in a possible implementation, the method further includes: The network device receives a random access response from the terminal device, where the random access response includes a second field, and the second field indicates a TAG corresponding to a TA value carried in the random access response, where if the random access procedure is the first-type random access procedure, the TAG indicated by the second field is the same as the TAG associated with the TCI state used for the PDCCH, to avoid a case in which the TAGs corresponding to the random access procedure are different, and align the TAGs corresponding to the random access procedure; or if the random access procedure is the second-type random access procedure, the TAG indicated by the second field is different from the TAG associated with the TCI state used for the PDCCH. In this way, different TRPs correspond to different TAGs.

Based on the first aspect or the second aspect, in a possible implementation, the first field indicates to send the random access request based on the path loss corresponding to the first path loss resource, or indicates to send the random access request based on the path loss corresponding to the second path loss resource. Therefore, the terminal device is explicitly indicated in an explicit manner to send the random access request based on the path loss corresponding to the first path loss resource or send the random access request based on the path loss corresponding to the second path loss resource. In this way, this helps the terminal device send the random access request based on the appropriate path loss.

Based on the first aspect, in a possible implementation, the method further includes: The terminal device receives a random access response from the network device, where the random access response includes a second field, and the second field indicates a TAG corresponding to a TA value carried in the random access response, where if the first field indicates to send the random access request based on the path loss corresponding to the first path loss resource, the TAG indicated by the second field is the same as a TAG associated with the TCI state used for the PDCCH, to avoid a case in which the TAGs corresponding to the random access procedure are different, and align the TAGs corresponding to the random access procedure; or if the first field indicates to send the random access request based on the path loss corresponding to the second path loss resource, the TAG indicated by the second field is different from a TAG associated with the TCI state used for the PDCCH. In this way, different TRPs correspond to different TAGs.

Based on the second aspect, in a possible implementation, the method further includes: The network device sends a random access response to the terminal device, where the random access response includes a second field, and the second field indicates a TAG corresponding to a TA value carried in the random access response, where if the first field indicates to send the random access request based on the path loss corresponding to the first path loss resource, the TAG indicated by the second field is the same as a TAG associated with the TCI state used for the PDCCH, to avoid a case in which the TAGs corresponding to the random access procedure are different, and align the TAGs corresponding to the random access procedure; or if the first field indicates to send the random access request based on the path loss corresponding to the second path loss resource, the TAG indicated by the second field is different from a TAG associated with the TCI state used for the PDCCH. In this way, different TRPs correspond to different TAGs.

Based on the first aspect or the second aspect, in a possible implementation, the first field indicates an SSB resource; and if a TAG associated with the SSB resource indicated by the first field is the same as a TAG associated with the TCI state used for the PDCCH, the random access request is sent based on the path loss corresponding to the first path loss resource; or if a TAG associated with the SSB resource indicated by the first field is different from a TAG associated with the TCI state used for the PDCCH, the random access request is sent based on the path loss corresponding to the second path loss resource. In this implementation, the terminal device may determine, in an implicit manner (that is, through TAG comparison), a TRP to which the random access procedure triggered by using the PDCCH is specific, so that the terminal device determines the appropriate path loss, and sends the random access request based on the path loss, to implement a TRP-specific random access procedure. If the TAG associated with the SSB resource indicated by the first field is the same as the TAG associated with the TCI state used for the PDCCH, it can be learned that the TRP to which the random access procedure triggered by using the PDCCH is specific is the same as a TRP for sending the PDCCH, which means an intra-cell multi-TRP transmission mode. In this case, the terminal device sends the random access request based on the path loss corresponding to the first path loss resource. If the TAG associated with the SSB resource indicated by the first field is different from the TAG associated with the TCI state used for the PDCCH, it can be learned that the TRP to which the random access procedure triggered by using the PDCCH is specific is different from a TRP for sending the PDCCH, which means an inter-cell multi-TRP transmission mode. In this case, the terminal device sends the random access request based on the path loss corresponding to the second path loss resource. Optionally, the TAG associated with the SSB resource indicated by the first field is a TAG corresponding to the random access procedure triggered by using the PDCCH or a TAG corresponding to the TRP corresponding to the random access procedure triggered by using the PDCCH.

Based on the first aspect, in a possible implementation, the method further includes: The terminal device receives a random access response from the network device, where the random access response includes a second field, and the second field indicates a TAG corresponding to a TA value carried in the random access response, where if the TAG associated with the SSB resource indicated by the first field is the same as the TAG associated with the TCI state used for the PDCCH, the TAG indicated by the second field is the same as the TAG associated with the TCI state used for the PDCCH, to avoid a case in which the TAGs corresponding to the random access procedure are different, and align the TAGs corresponding to the random access procedure; or if the TAG associated with the SSB resource indicated by the first field is different from the TAG associated with the TCI state used for the PDCCH, the TAG indicated by the second field is different from the TAG associated with the TCI state used for the PDCCH. In this way, different TRPs correspond to different TAGs.

Based on the second aspect, in a possible implementation, the method further includes: The network device sends a random access response to the terminal device, where the random access response includes a second field, and the second field indicates a TAG corresponding to a TA value carried in the random access response, where if the TAG associated with the SSB resource indicated by the first field is the same as the TAG associated with the TCI state used for the PDCCH, the TAG indicated by the second field is the same as the TAG associated with the TCI state used for the PDCCH, to avoid a case in which the TAGs corresponding to the random access procedure are different, and align the TAGs corresponding to the random access procedure; or if the TAG associated with the SSB resource indicated by the first field is different from the TAG associated with the TCI state used for the PDCCH, the TAG indicated by the second field is different from the TAG associated with the TCI state used for the PDCCH. In this way, different TRPs correspond to different TAGs.

Based on the first aspect or the second aspect, in a possible implementation, when a first condition is satisfied, the PDCCH includes the first information, where the first condition includes one or more of the following: Two TAGs are configured in a serving cell corresponding to the PDCCH; two control channel groups are configured in a serving cell corresponding to the PDCCH; or no associated additional cell is configured in a serving cell corresponding to the PDCCH. That is, when the first condition is satisfied, the network device sends the PDCCH to the terminal device, where the PDCCH includes the first information. That is, in the intra-cell multi-TRP transmission mode, the network device sends, to the terminal device, the PDCCH including the first information.

Based on the first aspect or the second aspect, in a possible implementation, when a second condition is satisfied, the first field indicates a TAG; the first field indicates whether a TAG corresponding to the random access procedure is the same as a TAG corresponding to the TCI state used for the PDCCH; the first field indicates a control channel group identifier; the first field indicates whether a control channel group identifier corresponding to the random access procedure is the same as a control channel group identifier corresponding to the PDCCH; the first field indicates that the random access procedure is a first-type random access procedure or a second-type random access procedure; or the first field indicates to send the random access request based on the path loss corresponding to the first path loss resource, or indicates to send the random access request based on the path loss corresponding to the second path loss resource, where the second condition includes one or more of the following: Two TAGs are configured in a serving cell corresponding to the PDCCH; two control channel groups are configured in a serving cell corresponding to the PDCCH; or no associated additional cell is configured in a serving cell corresponding to the PDCCH. In this implementation, when the second condition is satisfied, it may be learned that an intra-cell multi-TRP transmission mode is used, and the first field may indicate any one of the foregoing implementations. The terminal device may determine, based on the first field, to send the random access request based on the path loss corresponding to the first path loss resource or the path loss corresponding to the second path loss resource.

Based on the first aspect or the second aspect, in a possible implementation, when a third condition is satisfied, the first field indicates that a cell corresponding to the random access procedure is a serving cell corresponding to the PDCCH, or indicates that the cell corresponding to the random access procedure is an activated additional cell associated with the serving cell, where the third condition includes at least one of the following: Two TAGs are configured in the serving cell corresponding to the PDCCH; two control channel groups are configured in the serving cell corresponding to the PDCCH; or an associated additional cell is configured in the serving cell corresponding to the PDCCH. In this implementation, when the third condition is satisfied, it may be learned that an inter-cell multi-TRP transmission mode is used, and the first field may indicate the foregoing content. The terminal device determines, based on the first field, to send the random access request based on the path loss corresponding to the first path loss resource or the path loss corresponding to the second path loss resource.

Based on the first aspect or the second aspect, in a possible implementation, if the PDCCH is sent by using the serving cell corresponding to the PDCCH, and the first field indicates that the cell corresponding to the random access procedure is the serving cell, the random access request is sent based on the path loss corresponding to the first path loss resource; if the PDCCH is sent by using the serving cell corresponding to the PDCCH, and the first field indicates that the cell corresponding to the random access procedure is the activated additional cell associated with the serving cell, the random access request is sent based on the path loss corresponding to the second path loss resource; if the PDCCH is sent by using the activated additional cell associated with the serving cell corresponding to the PDCCH, and the first field indicates that the cell corresponding to the random access procedure is the serving cell corresponding to the PDCCH, the random access request is sent based on the path loss corresponding to the second path loss resource; or if the PDCCH is sent by using the activated additional cell associated with the serving cell corresponding to the PDCCH, and the first field indicates that the cell corresponding to the random access procedure is the activated additional cell associated with the serving cell corresponding to the PDCCH, the random access request is sent based on the path loss corresponding to the first path loss resource. In this way, in the inter-cell multi-TRP transmission mode, the terminal device determines, based on the first field, to send the random access request based on the path loss corresponding to the first path loss resource or send the random access request based on the path loss corresponding to the second path loss resource. In this way, the terminal device selects the appropriate path loss to send the random access request, to enable obtaining of the TA value in the multi-TRP transmission mode.

Based on the first aspect or the second aspect, in a possible implementation, when a fourth condition is satisfied, the PDCCH includes the first field, where the fourth condition includes one or two of the following: Two TAGs are configured in the serving cell corresponding to the PDCCH; or two control channel groups are configured in the serving cell corresponding to the PDCCH. That is, when the fourth condition is satisfied, the network device sends, to the terminal device, the PDCCH including the first field. In this way, this helps the terminal device select the appropriate path loss in the multi-TRP transmission mode to send the random access request.

Based on the first aspect or the second aspect, in a possible implementation, a third field on the PDCCH indicates that the cell corresponding to the random access procedure is the serving cell corresponding to the PDCCH, or indicates that the cell corresponding to the random access procedure is the activated additional cell associated with the serving cell; and the random access response message includes one TA value; and if the cell corresponding to the random access procedure is the serving cell, the TA value is a TA value corresponding to a 1^{st} TAG in the serving cell; or if the cell corresponding to the random access procedure is the activated additional cell associated with the serving cell, the TA value is a TA value corresponding to a 2^{nd} TAG in the serving cell. In this way, the terminal device determines the TAG corresponding to the TA value fed back in the random access response.

A third aspect of this application provides a first communication apparatus, including:
a transceiver module, configured to receive a PDCCH from a second communication apparatus, where the PDCCH is for triggering a random access procedure between the first communication apparatus and the second communication apparatus; and
a processing module, configured to determine, based on first information on the PDCCH, a path loss corresponding to a first path loss resource or a path loss corresponding to a second path loss resource, where the first path loss resource is a QCL resource in a TCI state used for the PDCCH, and the second path loss resource is an SSB resource indicated on the PDCCH, where
the transceiver module is further configured to send the random access request to the second communication apparatus based on the path loss corresponding to the first path loss resource or the path loss corresponding to the second path loss resource.

A fourth aspect of this application provides a second communication apparatus, including:
a transceiver module, configured to: send a PDCCH to a first communication apparatus, where the PDCCH is for triggering a random access procedure between the first communication apparatus and the second communication apparatus; and receive a random access request from the first communication apparatus, where the random access request is sent based on a path loss corresponding to a first path loss resource or a path loss corresponding to a second path loss resource, where the path loss corresponding to the first path loss resource or the path loss corresponding to the second path loss resource is determined based on first information on the PDCCH, the first path loss resource is a QCL resource in a TCI state used for the PDCCH, and the second path loss resource is an SSB resource indicated on the PDCCH.

Based on the third aspect or the fourth aspect, in a possible implementation, the first information is a first field on the PDCCH.

Based on the third aspect or the fourth aspect, in a possible implementation, the first field indicates a TAG; and if the TAG indicated by the first field is the same as a TAG associated with the TCI state used for the PDCCH, the random access request is sent based on the path loss corresponding to the first path loss resource; or if the TAG indicated by the first field is different from a TAG associated with the TCI state used for the PDCCH, the random access request is sent based on the path loss corresponding to the second path loss resource. Optionally, this implementation may alternatively be described as follows: The first field indicates whether a TAG corresponding to the random access procedure triggered by using the PDCCH is the same as the TAG associated with the TCI state used for the PDCCH; and if the TAGs are the same, the random access request is sent based on the path loss corresponding to the first path loss resource; or if the TAGs are different, the random access request is sent based on the path loss corresponding to the second path loss resource.

Based on the third aspect, in a possible implementation, the transceiver module is further configured to receive a random access response from the second communication apparatus, where the random access response includes a second field, the second field indicates a TAG corresponding to a TA value carried in the random access response, and the TAG indicated by the second field is the same as the TAG indicated by the first field.

Based on the fourth aspect, in a possible implementation, the transceiver module is further configured to send a random access response to the first communication apparatus, where the random access response includes a second field, the second field indicates a TAG corresponding to a TA value carried in the random access response, and the TAG indicated by the second field is the same as the TAG indicated by the first field.

Based on the third aspect or the fourth aspect, in a possible implementation, the first field indicates a control channel group identifier; and if the control channel group identifier indicated by the first field is the same as a control channel group identifier corresponding to the PDCCH, the random access request is sent based on the path loss corresponding to the first path loss resource; or if the control channel group identifier indicated by the first field is different from a control channel group identifier corresponding to the PDCCH, the random access request is sent based on the path loss corresponding to the second path loss resource. Optionally, this implementation may alternatively be described as follows: The first field indicates whether a control channel group identifier corresponding to the random access procedure triggered by using the PDCCH is the same as the control channel group identifier corresponding to the PDCCH; and if the control channel group identifiers are the same, the random access request is sent based on the path loss corresponding to the first path loss resource; or if the control channel group identifiers are different, the random access request is sent based on the path loss corresponding to the second path loss resource.

Based on the third aspect, in a possible implementation, the transceiver module is further configured to receive a random access response from the second communication apparatus, where the random access response includes a second field, and the second field indicates a TAG corresponding to a TA value carried in the random access response message, where if the control channel group identifier indicated by the first field is the same as the control channel group identifier corresponding to the PDCCH, the TAG indicated by the second field is the same as a TAG associated with the TCI state used for the PDCCH; or if the control channel group identifier indicated by the first field is different from the control channel group identifier corresponding to the PDCCH, the TAG indicated by the second field is different from a TAG associated with the TCI state used for the PDCCH.

Based on the fourth aspect, in a possible implementation, the transceiver module is further configured to send a random access response to the first communication apparatus, where the random access response includes a second field, and the second field indicates a TAG corresponding to a TA value carried in the random access response message, where if the control channel group identifier indicated by the first field is the same as the control channel group identifier corresponding to the PDCCH, the TAG indicated by the second field is the same as a TAG associated with the TCI state used for the PDCCH; or if the control channel group identifier indicated by the first field is different from the control channel group identifier corresponding to the PDCCH, the TAG indicated by the second field is different from a TAG associated with the TCI state used for the PDCCH.

Based on the third aspect or the fourth aspect, in a possible implementation, the first field indicates that the random access procedure is a first-type random access procedure or a second-type random access procedure; and if the random access procedure is the first-type random access procedure, the random access request is sent based on the path loss corresponding to the first path loss resource; or if the random access procedure is the second-type random access procedure, the random access request is sent based on the path loss corresponding to the second path loss resource.

Based on the third aspect or the fourth aspect, in a possible implementation, the first-type random access procedure includes: a random access procedure corresponding to a TRP that is the same as a TRP for sending the PDCCH, where in other words, the TRP corresponding to the first-type random access procedure is the same as the TRP for sending the PDCCH; or in other words, if the TRP corresponding to the random access procedure is the same as the TRP for sending the PDCCH, the random access procedure is the first-type random access procedure;
a random access procedure corresponding to a TAG that is the same as a TAG associated with the TCI state used for the PDCCH, where in other words, the TAG corresponding to the first-type random access procedure is the same as the TAG associated with the TCI state used for the PDCCH; or in other words, if the TAG corresponding to the random access procedure is the same as the TAG associated with the TCI state used for the PDCCH, the random access procedure is the first-type random access procedure;
   or
a random access procedure corresponding to a control channel group identifier that is the same as a control channel group identifier corresponding to the PDCCH, where in other words, the control channel group identifier corresponding to the first-type random access procedure is the same as the control channel group identifier corresponding to the PDCCH; or if the control channel group identifier corresponding to the random access procedure is the same as the control channel group identifier corresponding to the PDCCH, the random access procedure is the first-type random access procedure.

Based on the third aspect or the fourth aspect, in a possible implementation, the second-type random access procedure includes: a random access procedure corresponding to a TRP that is different from a TRP for sending the PDCCH, where in other words, the TRP corresponding to the second-type random access procedure is the same as the TRP for sending the PDCCH; or in other words, if the TRP corresponding to the random access procedure is different from the TRP for sending the PDCCH, the random access procedure is the second-type random access procedure; and in this way, the second-type random access procedure is defined from a perspective of a TRP;
or
a random access procedure corresponding to a TAG that is different from a TAG associated with the TCI state used for the PDCCH, where in other words, the TAG corresponding to the second-type random access procedure is the same as the TAG associated with the TCI state used for the PDCCH; or in other words, if the TAG corresponding to the random access procedure is different from the TAG associated with the TCI state used for the PDCCH, the random access procedure is the second-type random access procedure;
   or
a random access procedure corresponding to a control channel group identifier that is different from a control channel group identifier corresponding to the PDCCH, where in other words, the control channel group identifier corresponding to the second-type random access procedure is different from the control channel group identifier corresponding to the PDCCH; or in other words, if the control channel group identifier corresponding to the random access procedure is different from the control channel group identifier corresponding to the PDCCH, the random access procedure is the second-type random access procedure.

Based on the third aspect, in a possible implementation, the transceiver module is further configured to receive a random access response from the second communication apparatus, where the random access response includes a second field, and the second field indicates a TAG corresponding to a TA value carried in the random access response, where if the random access procedure is the first-type random access procedure, the TAG indicated by the second field is the same as the TAG associated with the TCI state used for the PDCCH; or if the random access procedure is the second-type random access procedure, the TAG indicated by the second field is different from the TAG associated with the TCI state used for the PDCCH.

Based on the fourth aspect, in a possible implementation, the transceiver module is further configured to receive a random access response from the first communication apparatus, where the random access response includes a second field, and the second field indicates a TAG corresponding to a TA value carried in the random access response, where if the random access procedure is the first-type random access procedure, the TAG indicated by the second field is the same as the TAG associated with the TCI state used for the PDCCH; or if the random access procedure is the second-type random access procedure, the TAG indicated by the second field is different from the TAG associated with the TCI state used for the PDCCH.

Based on the third aspect or the fourth aspect, in a possible implementation, the first field indicates to send the random access request based on the path loss corresponding to the first path loss resource, or indicates to send the random access request based on the path loss corresponding to the second path loss resource.

Based on the third aspect, in a possible implementation, the transceiver module is further configured to receive a random access response from the second communication apparatus, where the random access response includes a second field, and the second field indicates a TAG corresponding to a TA value carried in the random access response, where if the first field indicates to send the random access request based on the path loss corresponding to the first path loss resource, the TAG indicated by the second field is the same as a TAG associated with the TCI state used for the PDCCH; or if the first field indicates to send the random access request based on the path loss corresponding to the second path loss resource, the TAG indicated by the second field is different from a TAG associated with the TCI state used for the PDCCH.

Based on the fourth aspect, in a possible implementation, the transceiver module is further configured to send a random access response to the first communication apparatus, where the random access response includes a second field, and the second field indicates a TAG corresponding to a TA value carried in the random access response, where if the first field indicates to send the random access request based on the path loss corresponding to the first path loss resource, the TAG indicated by the second field is the same as a TAG associated with the TCI state used for the PDCCH; or if the first field indicates to send the random access request based on the path loss corresponding to the second path loss resource, the TAG indicated by the second field is different from a TAG associated with the TCI state used for the PDCCH.

Based on the third aspect or the fourth aspect, in a possible implementation, the first field indicates an SSB resource; and if a TAG associated with the SSB resource indicated by the first field is the same as a TAG associated with the TCI state used for the PDCCH, the random access request is sent based on the path loss corresponding to the first path loss resource; or if a TAG associated with the SSB resource indicated by the first field is different from a TAG associated with the TCI state used for the PDCCH, the random access request is sent based on the path loss corresponding to the second path loss resource.

Based on the third aspect, in a possible implementation, the transceiver module is further configured to receive a random access response from the second communication apparatus, where the random access response includes a second field, and the second field indicates a TAG corresponding to a TA carried in the random access response, where if the TAG associated with the SSB resource indicated by the first field is the same as the TAG associated with the TCI state used for the PDCCH, the TAG indicated by the second field is the same as the TAG associated with the TCI state used for the PDCCH; or if the TAG associated with the SSB resource indicated by the first field is different from the TAG associated with the TCI state used for the PDCCH, the TAG indicated by the second field is different from the TAG associated with the TCI state used for the PDCCH.

Based on the fourth aspect, in a possible implementation, the transceiver module is further configured to send a random access response to the first communication apparatus, where the random access response includes a second field, and the second field indicates a TAG corresponding to a TA value carried in the random access response, where if the TAG associated with the SSB resource indicated by the first field is the same as the TAG associated with the TCI state used for the PDCCH, the TAG indicated by the second field is the same as the TAG associated with the TCI state used for the PDCCH; or if the TAG associated with the SSB resource indicated by the first field is different from the TAG associated with the TCI state used for the PDCCH, the TAG indicated by the second field is different from the TAG associated with the TCI state used for the PDCCH.

Based on the third aspect or the fourth aspect, in a possible implementation, when a first condition is satisfied, the PDCCH includes the first information, where the first condition includes one or more of the following: Two TAGs are configured in a serving cell corresponding to the PDCCH; two control channel groups are configured in a serving cell corresponding to the PDCCH; or no associated additional cell is configured in a serving cell corresponding to the PDCCH.

Based on the third aspect or the fourth aspect, in a possible implementation, when a second condition is satisfied, the first field indicates a TAG; the first field indicates whether a TAG corresponding to the random access procedure is the same as a TAG corresponding to the TCI state used for the PDCCH; the first field indicates a control channel group identifier; the first field indicates whether a control channel group identifier corresponding to the random access procedure is the same as a control channel group identifier corresponding to the PDCCH; the first field indicates that the random access procedure is a first-type random access procedure or a second-type random access procedure; or the first field indicates to send the random access request based on the path loss corresponding to the first path loss resource, or indicates to send the random access request based on the path loss corresponding to the second path loss resource, where the second condition includes one or more of the following: Two TAGs are configured in a serving cell corresponding to the PDCCH; two control channel groups are configured in a serving cell corresponding to the PDCCH; or no associated additional cell is configured in a serving cell corresponding to the PDCCH.

Based on the third aspect or the fourth aspect, in a possible implementation, when a third condition is satisfied, the first field indicates that a cell corresponding to the random access procedure is a serving cell corresponding to the PDCCH, or indicates that the cell corresponding to the random access procedure is an activated additional cell associated with the serving cell, where the third condition includes at least one of the following: Two TAGs are configured in the serving cell corresponding to the PDCCH; two control channel groups are configured in the serving cell corresponding to the PDCCH; or an associated additional cell is configured in the serving cell corresponding to the PDCCH.

Based on the third aspect or the fourth aspect, in a possible implementation, if the PDCCH is sent by using the serving cell corresponding to the PDCCH, and the first field indicates that the cell corresponding to the random access procedure is the serving cell, the random access request is sent based on the path loss corresponding to the first path loss resource; if the PDCCH is sent by using the serving cell corresponding to the PDCCH, and the first field indicates that the cell corresponding to the random access procedure is the activated additional cell associated with the serving cell, the random access request is sent based on the path loss corresponding to the second path loss resource; if the PDCCH is sent by using the activated additional cell associated with the serving cell corresponding to the PDCCH, and the first field indicates that the cell corresponding to the random access procedure is the serving cell corresponding to the PDCCH, the random access request is sent based on the path loss corresponding to the second path loss resource; or if the PDCCH is sent by using the activated additional cell associated with the serving cell corresponding to the PDCCH, and the first field indicates that the cell corresponding to the random access procedure is the activated additional cell associated with the serving cell corresponding to the PDCCH, the random access request is sent based on the path loss corresponding to the first path loss resource.

Based on the third aspect or the fourth aspect, in a possible implementation, when a fourth condition is satisfied, the PDCCH includes the first field, where the fourth condition includes one or two of the following: Two TAGs are configured in the serving cell corresponding to the PDCCH; or two control channel groups are configured in the serving cell corresponding to the PDCCH.

Based on the third aspect or the fourth aspect, in a possible implementation, a third field on the PDCCH indicates that the cell corresponding to the random access procedure is the serving cell corresponding to the PDCCH, or indicates that the cell corresponding to the random access procedure is the activated additional cell associated with the serving cell; and the random access response message includes one TA value; and if the cell corresponding to the random access procedure is the serving cell, the TA value is a TA value corresponding to a 1^{st} TAG in the serving cell; or if the cell corresponding to the random access procedure is the activated additional cell associated with the serving cell, the TA value is a TA value corresponding to a 2^{nd} TAG in the serving cell.

A fifth aspect of this application provides a communication apparatus. The communication apparatus includes a processor and a memory. The memory stores a computer program or computer instructions, and the processor is configured to invoke and run the computer program or the computer instructions stored in the memory, so that the processor implements any one of the implementations of the first aspect or the second aspect.

Optionally, the communication apparatus further includes a transceiver, and the processor is configured to control the transceiver to receive and send signals.

A sixth aspect of this application provides a communication apparatus, including a processor and an interface circuit. The processor is configured to: communicate with another apparatus through the interface circuit, and perform the method according to the first aspect or the second aspect. There are one or more processors.

A seventh aspect of this application provides a communication apparatus, including a processor, configured to: connect to a memory, and invoke a program stored in the memory, to perform the method according to the first aspect or the second aspect. The memory may be located inside or outside the communication apparatus. In addition, there are one or more processors.

In an implementation, the communication apparatus in the third aspect to the seventh aspect may be a chip or a chip system.

An eighth aspect of this application provides a computer program product including computer instructions. When the computer program product runs on a computer, the computer is caused to perform any one of the implementations of the first aspect or the second aspect.

A ninth aspect of this application provides a computer-readable storage medium, including computer instructions. When the instructions are run on a computer, the computer is caused to perform any one of the implementations of the first aspect or the second aspect.

A tenth aspect of this application provides a chip apparatus, including a processor, configured to invoke a computer program or computer instructions in a memory, to cause the processor to perform any one of the implementations of the first aspect or the second aspect.

Optionally, the processor is coupled to the memory through an interface.

An eleventh aspect of this application provides a communication system. The communication system includes a terminal device and a network device. The terminal device is configured to perform the method shown in the first aspect, and the network device is configured to perform the method shown in the second aspect.

It can be learned from the foregoing technical solutions that the terminal device receives the PDCCH from the network device, where the PDCCH is for triggering the random access procedure between the terminal device and the network device. The terminal device determines, based on the first information on the PDCCH, the path loss corresponding to the first path loss resource or the path loss corresponding to the second path loss resource, where the first path loss resource is the QCL resource in the TCI state used for the PDCCH, and the second path loss resource is the SSB resource indicated on the PDCCH. The terminal device sends the random access request to the network device based on the path loss corresponding to the first path loss resource or the path loss corresponding to the second path loss resource. In this way, the terminal device selects the appropriate path loss to send the random access request, to enable obtaining of the TA value in the multi-TRP transmission mode.

### BRIEF DESCRIPTION OF DRAWINGS

FIG. 1 is a diagram of a communication system according to an embodiment of this application;
FIG. 2 is another diagram of a communication system according to an embodiment of this application;
FIG. 3 is a diagram of an intra-cell multi-TRP transmission mode according to an embodiment of this application;
FIG. 4 is a diagram of an inter-cell multi-TRP transmission mode according to an embodiment of this application;
FIG. 5 is a diagram of a TA value according to an embodiment of this application;
FIG. 6 is a diagram of an embodiment of a random access method according to embodiments of this application;
FIG. 7 is a diagram of a structure of a communication apparatus according to an embodiment of this application;
FIG. 8 is a diagram of another structure of a communication apparatus according to an embodiment of this application;
FIG. 9 is a diagram of a structure of a terminal device according to an embodiment of this application; and
FIG. 10 is a diagram of a structure of a network device according to an embodiment of this application.

### DESCRIPTION OF EMBODIMENTS

Embodiments of this application provide a random access method and a related apparatus, so that a terminal device selects an appropriate path loss to send a random access request, to enable obtaining of a TA value in a multi-TRP transmission mode.

The following clearly and completely describes the technical solutions in embodiments of this application with reference to the accompanying drawings in embodiments of this application. It is clear that embodiments are merely some but not all of embodiments of this application. All other embodiments obtained by persons skilled in the art based on embodiments of this application without creative efforts shall fall within the protection scope of this application.

Reference to "an embodiment", "some embodiments", or the like described in this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment, but mean "one or more but not all of embodiments", unless otherwise specially emphasized in another manner. The terms "include", "contain", "have", and their variants all mean "include but are not limited to", unless otherwise specially emphasized in another manner.

In descriptions of this application, unless otherwise specified, "/" indicates "or". For example, A/B may indicate A or B. "And/or" in this specification describes only an association relationship between associated objects, and indicates that there may be three relationships. For example, A and/or B may indicate the following three cases: Only A exists, both A and B exist, and only B exists. In addition, "at least one" means one or more, and "a plurality of" means two or more. "At least one of the following" or a similar expression thereof indicates any combination of the items, and includes a singular item or any combination of plural items. For example, at least one of a, b, or c may indicate a, b, c, a and b, a and c, b and c, or a, b, and c. a, b, and c each may be singular or plural.

It may be understood that, in this application, an "indication" may include a direct indication, an indirect indication, an explicit indication, and an implicit indication. When a specific piece of indication information is described as indicating A, it may be understood as that the indication information carries A, directly indicates A, or indirectly indicates A.

The technical solutions in this application may be applied to various communication systems, for example, a 5th generation (5th generation, 5G) mobile communication system, a new radio (new radio, NR) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a future communication system after a 5G network, a vehicle to everything (vehicle to everything, V2X) communication system, a device to device (device to device, D2D) communication system, an internet of things communication system, an industrial internet communication system, or a satellite communication system. A wireless communication system in this application further includes but is not limited to a narrowband internet of things (narrowband internet of things, NB-IoT) system, a global system for mobile communications (global system for mobile communications, GSM), an enhanced data rates for GSM evolution (enhanced data rates for GSM evolution, EDGE) system, a wideband code division multiple access (wideband code division multiple access, WCDMA) system, a code division multiple access 2000 (code division multiple access 2000, CDMA2000) system, or a time division-synchronous code division multiple access (time division-synchronous code division multiple access, TD-SCDMA) system.

The communication system to which this application is applicable includes a network device and the terminal device. The following describes the network device and the terminal device.

The terminal device may be a wireless terminal device that can receive scheduling information and indication information of the network device. The terminal device may be a device that provides a voice and/or data connectivity for a user, a handheld device with a wireless connection function, or another processing device connected to a wireless modem.

The terminal device is also referred to as user equipment (user equipment, UE), a mobile station (mobile station, MS), a mobile terminal (mobile terminal, MT), customer premises equipment (customer premises equipment, CPE), or the like. The terminal device is a device that includes a wireless communication function (providing the voice/data connectivity for the user), for example, the handheld device or a vehicle-mounted device having the wireless connection function. Currently, some examples of the terminal device are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control, a wireless terminal in vehicle to everything, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. For example, the wireless terminal in the self driving may be an uncrewed aerial vehicle, a helicopter, or an airplane. For example, the wireless terminal in the vehicle to everything may be a vehicle-mounted device, an entire vehicle device, an in-vehicle module, a vehicle, or a ship. The wireless terminal in the industrial control may be a camera, a robot, a robotic arm, or the like. The wireless terminal in the smart home may be a television, an air conditioner, a sweeper, a speaker, a set-top box, or the like.

It should be noted that the terminal device may be a device or an apparatus with a chip, a device or an apparatus integrated with a circuit, or a chip, a chip system, a module, or a control unit in the foregoing device or apparatus. This is not specifically limited in this application. It should be noted that, in this application, reference to the terminal device may mean the terminal device, or may mean a chip, a functional module, an integrated circuit, or the like that is in the terminal device and that completes the method provided in this application. This is not specifically limited in this application.

The network device may be a device in a wireless network. For example, the network device may be a device that is deployed in a radio access network and that provides a wireless communication function for the terminal device. For example, the network device may be a radio access network (radio access network, RAN) node that enables the terminal device to access the wireless network, and may also be referred to as an access network device, a RAN entity, an access node, a network node, a communication apparatus, or the like.

Specifically, the network device may be an access network device in a cellular system related to the 3rd generation partnership project (3rd generation partnership project, 3GPP), for example, a 4G communication system or the 5G communication system. Alternatively, the network device may be an access network device in an open access network (open RAN, O-RAN, or ORAN) or a cloud radio access network (cloud radio access network, CRAN). Alternatively, the network device may be an access network device in a communication system obtained by integrating two or more of the foregoing communication systems.

The network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a macro base station, a micro base station, a wireless relay node, a donor node, a radio controller in a CRAN scenario, a wireless backhaul node, a transmission point (transmission point, TP), a transmission and reception point (transmission and reception point, TRP), or the like, or may be a network device in the 5G mobile communication system, for example, a next generation NodeB (next generation NodeB, gNB), a TRP, or a TP in the NR system, or one antenna panel or one group of antenna panels (including a plurality of antenna panels) of a base station in the 5G mobile communication system. Alternatively, the network device may be a network node that constitutes a gNB or a transmission point, for example, a central unit (central unit, CU), a distributed unit (distributed unit, DU), a central unit-control plane (central unit-control plane, CU-CP), a central unit-user plane (central unit-user plane, CU-UP), or a radio unit (radio unit, RU). The CU and the DU may be separately disposed, or may be included in a same network element, for example, a BBU. The RU may be included in a radio frequency device or a radio frequency unit, for example, a remote radio unit (remote radio unit, RRU), an active antenna unit (active antenna unit, AAU), or a remote radio head (remote radio head, RRH). Alternatively, the network device may be a server, a wearable device, a vehicle, a vehicle-mounted device, or the like. For example, an access network device in a V2X technology may be a road side unit (road side unit, RSU).

It should be noted that, in different systems, the CU (or the CU-CP and the CU-UP), the DU, or the RU may alternatively have different names, but persons skilled in the art may understand meanings of the names. For example, in an open access network (open radio access network, ORAN) system, the CU may also be referred to as an open central unit (open central unit, O-CU) or an open CU, the DU may also be referred to as an open distributed unit (open distributed unit, O-DU), the CU-CP may also be referred to as an open central unit-control plane (open central unit-control plane, O-CU-CP), the CU-UP may also be referred to as an open central unit-user plane (open central unit-user plane, O-CU-UP), and the RU may also be referred to as an open radio unit (open radio unit, O-RU). This is not specifically limited in this application. Any unit in the CU, the CU-CP, the CU-UP, the DU, and the RU in this application may be implemented by using a software module, a hardware module, or a combination of the software module and the hardware module.

Optionally, for the network elements in the ORAN system, the network elements may implement protocol layer functions shown in Table 1 below.

**Table 1**

| ORAN network element | Protocol layer function |
|---|---|
| O-CU-CP | Radio resource control (radio resource control, RRC) and packet data convergence protocol control plane (packet data convergence protocol control plane, PDCP-C) |
| O-CU-UP | Service data adaptation protocol (service data adaptation protocol, SDAP) and packet data convergence protocol user plane (packet data convergence protocol user plane, PDCP-U) |
| O-DU | Radio link control (radio link control, RLC), medium access control (medium access control, MAC), and higher physical layer (PHY-high) |
| O-RU | Lower physical layer (PHY-low) |

It should be noted that, in the ORAN system, the network device in this application may be one or more network elements in Table 1 above.

The following describes architectures of the CU and the DU of the access network device. The access network device includes at least one CU and at least one DU. Optionally, the access network device further includes at least one RU.

The following provides descriptions by using an example in which the access network device includes one CU and one DU. The CU has some functions of a core network, and the CU may include the CU-CP and the CU-UP. The CU and the DU may be configured based on wireless network protocol layer functions implemented by the CU and the DU. For example, the CU is configured to implement functions of a packet data convergence protocol (packet data convergence protocol, PDCP) layer and a protocol layer (for example, an RRC layer and/or an SDAP layer) above the PDCP layer, and the DU is configured to implement a function of a protocol layer (for example, an RLC layer, a MAC layer, and/or a physical (physical, PHY) layer) below the PDCP layer. For another example, the CU is configured to implement a function of a protocol layer (for example, an RRC layer and/or an SDAP layer) above a PDCP layer, and the DU is configured to implement functions of the PDCP layer and a protocol layer (for example, an RLC layer, a MAC layer, and/or a PHY layer) below the PDCP layer.

When the CU includes the CU-CP and the CU-UP, the CU-CP is configured to implement a control plane function of the CU, and the CU-UP is configured to implement a user plane function of the CU. For example, when the CU is configured to implement functions of the PDCP layer, the RRC layer, and the SDAP layer, the CU-CP is configured to implement the function of the RRC layer and a control plane function of the PDCP layer, and the CU-UP is configured to implement the function of the SDAP layer and a user plane function of the PDCP layer.

The CU-CP may interact with a network element in the core network configured to implement a control plane function. The network element in the core network configured to implement the control plane function may be an access and mobility function network element, for example, an access and mobility management function (access and mobility management function, AMF) in the 5G system. The access and mobility function network element is configured to be responsible for mobility management in a mobile network, for example, location update of the terminal device, network registration of the terminal device, and handover of the terminal device.

The CU-UP may interact with a network element in the core network configured to implement a user plane function. The network element in the core network configured to implement the user plane function, for example, a user plane function (user plane function, UPF) in the 5G system, is configured to be responsible for forwarding and receiving data in the terminal device.

The foregoing configuration of the CU and the DU is merely an example. Alternatively, functions of the CU and the DU may be configured based on a requirement. For example, the CU or the DU may be configured to have functions of more protocol layers, or the CU or the DU may be configured to have some processing functions of a protocol layer. For example, some functions of the RLC layer and a function of a protocol layer above the RLC layer are set on the CU, and a remaining function of the RLC layer and a function of a protocol layer below the RLC layer are set on the DU. For another example, functions of the CU or the DU may be obtained through division based on a service type or another system requirement. For example, division is performed based on a delay. Functions whose processing time needs to satisfy a low-delay requirement are set on the DU, and functions whose processing time does not need to satisfy the delay requirement are set on the CU.

The DU and the RU may cooperate to jointly implement a function of the PHY layer. One DU may be connected to one or more RUs. Functions of the DU and the RU may be configured into a plurality of manners based on a design. For example, the DU is configured to implement a baseband function, and the RU is configured to implement an intermediate radio frequency function. For another example, the DU is configured to implement a higher layer function of the PHY layer, and the RU is configured to: implement a lower layer function of the PHY layer, or implement the lower layer function and a radio frequency function. The higher layer function of the physical layer may include some functions of the physical layer, and the some functions are closer to the MAC layer. The lower layer function of the physical layer may include some other functions of the physical layer, and the some other functions are closer to an intermediate radio frequency side.

It should be noted that the network device may be a device or an apparatus with a chip, a device or an apparatus integrated with a circuit, or a chip, a chip system, a module, or a control unit in the foregoing device or apparatus. This is not specifically limited in this application. It should be noted that, in this application, reference to the network device may mean the network device, or may mean a chip, a functional module, an integrated circuit, or the like that is in the network device and that completes the method provided in this application. This is not specifically limited in this application.

It should be noted that both concepts of the network device and the TRP are mentioned in this application. The network device may be understood as a general term of all devices (including sites) on a network side. For example, a plurality of TRPs may be collectively referred to as the network device. The TRP refers to a transmission node that is specifically located at a physical location. In other words, the network device conceptually includes the TRP. That is, the network device may include one or more TRPs.

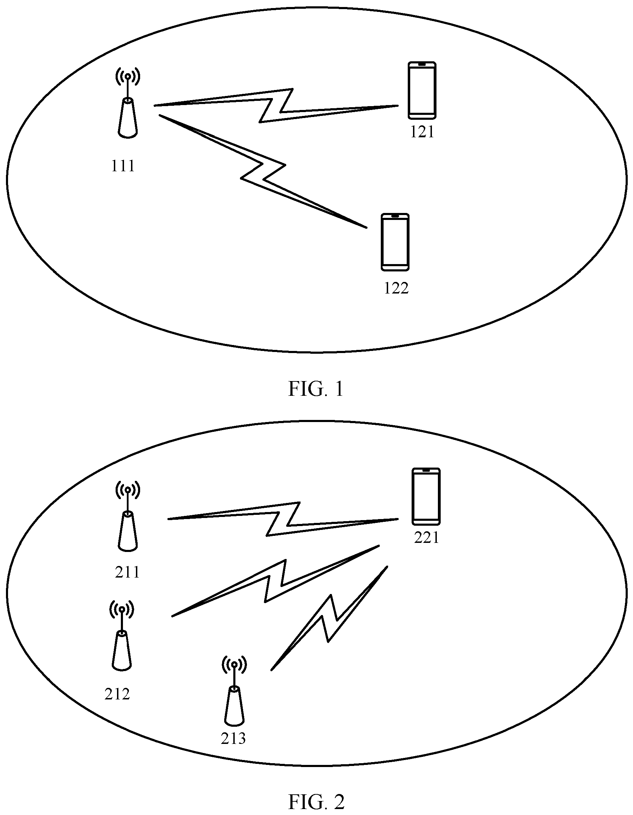

To facilitate understanding of the technical solutions in embodiments of this application, the following shows, with reference to FIG. 1 and FIG. 2, two possible communication systems to which the method provided in embodiments of this application is applicable.

FIG. 1 is a diagram of a communication system according to an embodiment of this application. As shown in FIG. 1, the communication system includes at least one network device and at least one terminal device, for example, a network device 111, a terminal device 121, and a terminal device 122 shown in FIG. 1. The network device 111 may perform transmission with the terminal device 121 and the terminal device 122.

FIG. 2 is another diagram of a communication system according to an embodiment of this application. As shown in FIG. 2, the communication system may include at least two network devices and at least one terminal device, for example, a network device 211, a network device 212, a network device 213, and a terminal device 221 shown in FIG. 2. The terminal device 221 may be provided with a communication service by a plurality of network devices. For example, as shown in FIG. 2, the network device 211 may perform transmission with the terminal device 221, the network device 212 may perform transmission with the terminal device 221, and the network device 213 may perform transmission with the terminal device 221. In other words, one terminal device may be provided with a communication service by a plurality of network devices simultaneously.

The following describes technical terms in this application.
1. Beam (beam): The beam is a communication resource. The beam may be a wide beam, a narrow beam, or another type of beam, and a technology for forming the beam may be a beamforming technology or another technical means. The beamforming technology may be specifically a digital beamforming technology, an analog beamforming technology, and a hybrid digital/analog beamforming technology. Different beams may be considered as different resources.

In an NR protocol, the beam may be referred to as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi-colocation (quasi-colocation, QCL) information, a QCL assumption, a QCL indication, or the like. The beam may be indicated by a transmission configuration indicator state (transmission configuration indicator state, TCI-state) parameter or a spatial relation (spatial relation) parameter. Therefore, in this application, the beam may be replaced with the spatial domain filter, the spatial filter, the spatial domain parameter, the spatial parameter, the spatial domain setting, the spatial setting, the quasi-colocation (quasi-colocation, QCL) information, the QCL assumption, the QCL indication, TCI-states (including an uplink TCI-state and a downlink TCI-state), a spatial relation, or the like. The foregoing terms are also equivalent to each other. Alternatively, the beam may be replaced with another term that represents the beam. This is not limited in this application.

A transmitting end may send same information or different information by using different beams. Optionally, a plurality of beams having same or similar communication features may be considered as one beam. The beam may include one or more antenna ports for transmission of a data channel, a control channel, a sounding signal, and the like.

A beam for sending a signal may be referred to as a transmit beam (transmit beam, Tx beam), a spatial domain transmit filter (spatial domain transmit filter), a spatial transmit filter (spatial transmit filter), a spatial domain transmit parameter (spatial domain transmit parameter), a spatial transmit parameter (spatial transmit parameter), a spatial domain transmit setting (spatial domain transmit setting), or a spatial transmit setting (spatial transmit setting). An uplink transmit beam may be indicated by any one of the spatial relation, the TCI-state, and a sounding reference signal (sounding reference signal, SRS) resource (indicating using of a transmit beam of an SRS). Therefore, the uplink transmit beam may alternatively be replaced with the SRS resource.

A beam for receiving a signal may be referred to as a receive beam (receive beam, Rx beam), a spatial domain receive filter (spatial domain receive filter), a spatial receive filter (spatial receive filter), a spatial domain receive parameter (spatial domain receive parameter), a spatial receive parameter (spatial receive parameter), a spatial domain receive setting (spatial domain receive setting), or a spatial receive setting (spatial receive setting).

For example, the transmit beam may refer to distribution of signal strength formed in different directions in space after the signal is transmitted through an antenna, and the receive beam may refer to distribution of signal strength that is of a radio signal received from an antenna and that is in different directions in space. It can be understood that the one or more antenna ports forming the beam may alternatively be considered as one antenna port set.

When a low frequency band or an intermediate frequency band is used, the transmitting end may send a signal omnidirectionally or at a wide angle. When a high frequency band is used, because of a small carrier wavelength in a high-frequency communication system, antenna arrays formed by a plurality of antenna elements may be disposed at the transmitting end and a receiving end. The transmitting end sends a signal by using a specific beamforming weight, so that the sent signal forms a spatially directional beam, and the receiving end receives the signal by using the antenna array by using a specific beamforming weight. This helps increase a received power of the signal at the receiving end and resist path attenuation.
2. QCL: A quasi-colocation relationship indicates that a plurality of resources have one or more same or similar communication features. Same or similar communication configurations may be used for the plurality of resources having the quasi-colocation relationship. For example, if two antenna ports have the quasi-colocation relationship, a large-scale channel property of transmitting one symbol through one port may be deduced from a large-scale channel property of transmitting one symbol through the other port. The large-scale property may include delay spread, an average delay, Doppler spread, a Doppler frequency shift, an average gain, a receive parameter, a terminal device receive beam number, transmit/receive channel correlation, a receive angle of arrival, spatial correlation of a receiver antenna, a dominant angle of arrival (angle of arrival, AoA), an average angle of arrival, AoA spread, and the like. Specifically, that a colocation indication indicates whether at least two groups of antenna ports have a colocation relationship includes: The colocation indication indicates whether channel state information reference signals sent through the at least two groups of antenna ports are from a same transmission point, or the colocation indication indicates whether channel state information reference signals sent through the at least two groups of antenna ports are from a same beam group.
3. TCI: The TCI may also be referred to as the TCI state (TCI-state). In uplink and downlink transmission, both a network device and a terminal device need to use correct beams, to implement correct transmission. In downlink transmission, the network device needs to indicate, to the terminal device, a downlink transmit beam used by the network device. The terminal device may determine an appropriate receive beam based on the downlink transmit beam, where the receive beam is for receiving information from the network device. In uplink transmission, the network device also needs to indicate, to the terminal device, an uplink transmit beam to be used by the terminal device to send information to the network device. The network device may determine an uplink transmit beam with good signal quality of the terminal device. Both the uplink transmit beam and the downlink transmit beam may be indicated by corresponding TCI states. Specifically, the downlink transmit beam may be indicated by the downlink TCI state, and the uplink transmit beam may be indicated by the uplink TCI state.

In the 3GPP protocol, the network device may indicate the TCI state to the terminal device by using a TCI field in downlink control information (downlink control information, DCI). The TCI field has a size of 3 bits, and may be specifically represented as eight different field values (codepoints). Each field value of the TCI field may be associated with one TCI state index. The TCI state index may uniquely identify one TCI state, and the TCI state may be a downlink TCI state or an uplink TCI state. Each field value of the TCI field may alternatively be associated with two TCI state indexes. The two TCI state indexes may uniquely identify two TCI states, and the two TCI states may include one downlink TCI state and one uplink TCI state.

The downlink TCI state includes several parameters. The terminal device may determine related information of the downlink transmit beam based on these parameters, to determine to use the appropriate receive beam to receive the information from the network device. The TCI state is configured by the network device for each terminal device, and a structure of the downlink TCI state is shown as follows:

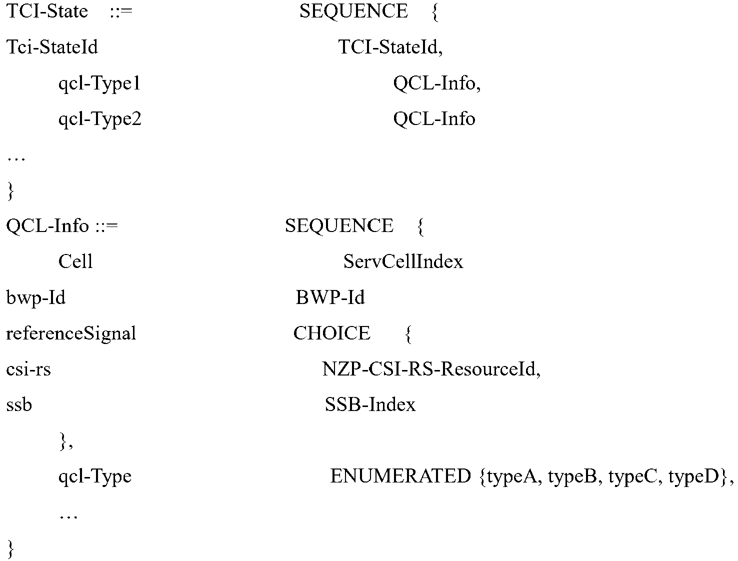

Each TCI state includes one index (tci-StateId) thereof and two pieces of quasi-colocation information (quasi-colocation information, QCL-info). Each piece of QCL-info includes one reference signal resource, to indicate that downlink timing, a frequency offset, or a receive beam that is the same as that for the reference signal resource should be used for downlink transmission using the TCI state. This specifically depends on a type of the QCL-info. A QCL type may have four values: {typeA, typeB, typeC, typeD}. When the QCL type is typeA, typeB, and typeC, the downlink timing and the frequency offset that are the same as those for the reference signal resource should be used for downlink transmission. When the QCL type is typeD, the receive beam that is the same as that for the reference signal resource should be used for downlink transmission. In the foregoing two pieces of QCL-info, a type of one piece of QCL-info is typeD, and a type of the other piece of QCL-info is typeA, typeB, or typeC. The terminal device may determine, based on QCL-info of typeD, a specific receive beam for reception in corresponding downlink transmission. Specifically, the following steps are performed.

The network device indicates a specific downlink TCI state to the terminal device by using DCI. The terminal device determines a reference signal resource in QCL information of typeD in the downlink TCI state. The terminal device uses a receive beam for the reference signal resource as a receive beam used for downlink transmission. It should be noted that the receive beam for the reference signal resource is obtained by the terminal device in advance through a beam management procedure. Through the beam management procedure, the terminal device may determine an optimal receive beam for receiving the reference signal resource, and use the receive beam as the receive beam for the reference signal resource.

The uplink TCI state includes a reference signal resource, to indicate that an uplink transmit beam that is the same as that for the reference signal resource should be used for uplink transmission using the TCI state. The terminal device may determine, based on the reference signal resource, a specific transmit beam for uplink transmission. In the uplink TCI state, the reference signal resource is not included in QCL-info, and QCL types are not distinguished. A reason is as follows: Information about uplink timing and a frequency offset does not need to be referenced, and only the uplink transmit beam needs to be referenced. A structure of the uplink TCI state is shown as follows:

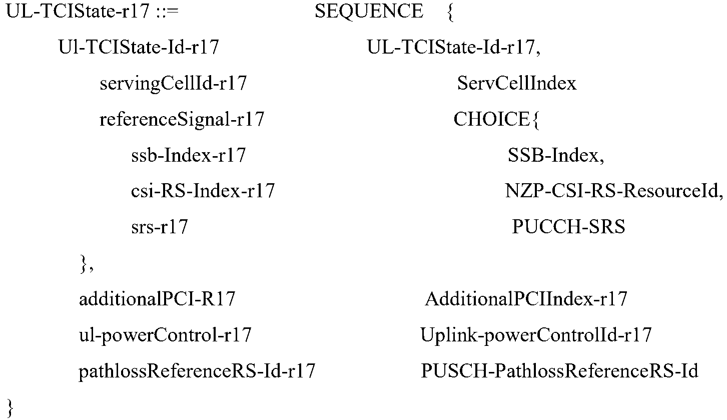

Specifically, the following steps are performed.

The network device indicates a specific uplink TCI state to the terminal device by using DCI. The terminal device determines a reference signal resource in the uplink TCI state. The terminal device uses a transmit beam for the reference signal resource as a transmit beam used by the terminal device to perform uplink transmission. It should be noted that the transmit beam for the reference signal resource is obtained by the terminal device in advance through a beam management procedure.

The following describes configuration, activation, and indication of the TCI state.

Configuration of the TCI-state: The network device configures a plurality of TCI-states for the terminal device by using RRC signaling. Each of these TCI-states includes a piece of QCL-Info of typeD. Alternatively, the network device may configure a TCI-state that does not include QCL-info of typeD. However, the TCI-states do not indicate a data transmission beam. Therefore, details are not further described herein.

Activation of the TCI-state: After configuring the plurality of TCI-states, the network device further needs to activate eight of the TCI states by using medium access control control element (medium access control control element, MAC CE). The eight TCI-states one-to-one correspond to the eight values of the TCI field in the DCI. In other words, the eight specific TCI-states corresponding to the eight values of the TCI field in the DCI are determined based on the MAC CE.

Indication of the TCI state: The network device indicates a specific TCI-state by using the TCI field in the DCI. For example, a value of the TCI field in the DCI sent by the network device to the terminal device is 000, indicating that a TCI state corresponding to 000 is used for the data transmission beam. A reference signal included in QCL-Info of typeD in the TCI state is a channel state information reference signal (channel state information reference signal, CSI-RS) whose index is #1, indicating that the data transmission beam is the same as a receive beam corresponding to the CSI-RS whose index is #1. The receive beam corresponding to the CSI-RS whose index is #1 may be determined through a beam measurement procedure, and is known to the terminal device. Therefore, the terminal device may determine, based on a specific value of the TCI field, a beam corresponding to the data transmission beam, to send or receive data by using the corresponding beam.

It should be noted that the three description manners, namely, the TCI state, the TCI-state, and the TCI state in this specification may be interchanged.

Single-TRP transmission mode: The terminal device performs transmission with a single TRP.

Multi-TRP transmission mode: The terminal device performs transmission with a plurality of TRPs. Multi-TRP transmission modes are further classified into an intra-cell multi-TRP transmission mode and an inter-cell multi-TRP transmission mode.

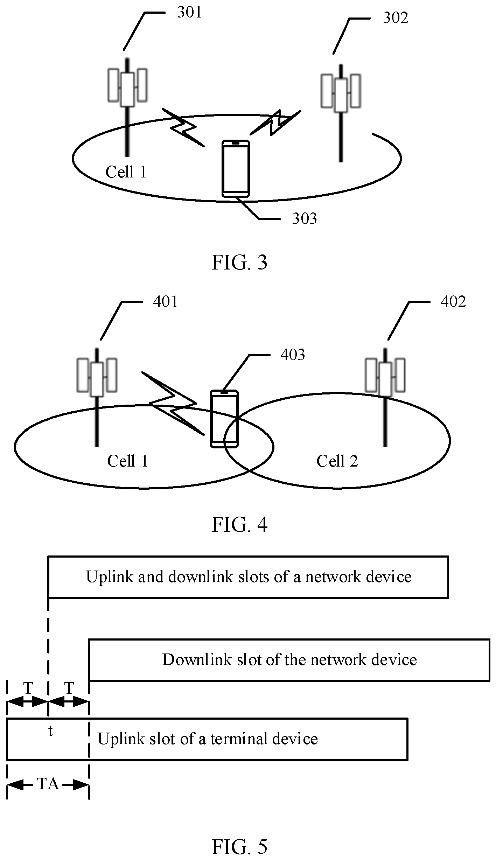

The intra-cell multi-TRP transmission mode means that two TRPs both correspond to a same serving cell. That is, one cell includes two network devices or two TRPs. The two network devices or the two TRPs may be combined to implement joint transmission. FIG. 3 is a diagram of an intra-cell multi-TRP transmission mode according to an embodiment of this application. As shown in FIG. 3, a TRP 301 and a TRP 302 both correspond to a cell 1, a terminal device 303 is located in the cell 1, and the TRP 301 and the TRP 302 may provide a communication service for the terminal device 303.

The inter-cell multi-TRP transmission mode means that two TRPs correspond to different cells. That is, TRPs in two cells are combined to implement joint transmission. In inter-cell multi-TRP transmission, one TRP corresponds to one serving cell, and the other TRP corresponds to one additional cell. As shown in FIG. 4, a TRP 401 corresponds to a cell 1, a TRP 402 corresponds to a cell 2, the cell 1 is a serving cell, and the cell 2 is an additional cell. The TRP 401 and the TRP 402 may jointly provide a communication service for a terminal device 403.

Serving cell: The serving cell is a cell that is configured by the network device for the terminal device and that is for data transmission. The network device needs to configure all parameters of the serving cell for the terminal device. The terminal device may independently perform data transmission by using the serving cell. A serving cell corresponding to a PDCCH is one of serving cells configured by the network device for the terminal device.

Additional cell: In addition to the serving cell, the network device may further configure one or more additional cells for the terminal device. The additional cell may be for data transmission to some extent. The network device does not need to configure all parameters of the additional cell for the terminal device, but configures information about the additional cell as a parameter of the serving cell for the terminal device. The additional cell can work only by depending on a serving cell associated with the additional cell. The network device may configure a plurality of additional cells for one serving cell, but only one additional cell is activated simultaneously. The network device may perform joint transmission by using the serving cell and the activated additional cell corresponding to the serving cell, which means the inter-cell multi-TRP transmission mode mentioned above. In other words, in an inter-cell multi-TRP scenario, the serving cell may be configured with the associated additional cell. The additional cell may be specifically represented by an additional physical cell identity (additional physical cell idex).

TA value: The TA value is used by the terminal device to perform uplink transmission, and specifically refers to time by which an uplink frame used by the terminal device to send uplink data needs to be advanced compared with a downlink frame used by the terminal device to receive downlink data. The TA value may be obtained through a random access procedure. In the multi-TRP transmission mode, distances between all TRPs and the terminal device are different. For the terminal device, each TRP corresponds to one TA value.

TAG: The TAG is a parameter for managing the TA value. Each TAG corresponds to one TA value. In the single-TRP transmission mode, each serving cell corresponds to one TAG. The terminal device needs to perform uplink transmission in the serving cell by using a TA value corresponding to the TAG corresponding to the serving cell. In the multi-TRP transmission mode, each serving cell corresponds to two TAGs, and each TAG corresponds to one TRP corresponding to the serving cell. The terminal device needs to perform uplink transmission with the TRP by using a TA value corresponding to the TAG corresponding to the TRP. Regardless of the intra-cell multi-TRP transmission mode or the inter-cell multi-TRP transmission mode, two TAGs need to be configured in a configuration parameter of the serving cell, to maintain TA values respectively corresponding to the two TRPs.

Control channel group: The control channel group is for grouping control channels of the serving cell. Each control channel group corresponds to one TRP. The control channel group corresponds to one identifier, which may be referred to as a control channel group identifier. Regardless of the intra-cell multi-TRP transmission mode or the inter-cell multi-TRP transmission mode, two control channel groups need to be configured in the configuration parameter of the serving cell.

In a 5G communication system, a slot is used as a basic time unit for both uplink and downlink transmission. That is, data transmission is performed once in each slot. A start moment of a slot of the network device is fixed, and uplink and downlink slots of the network device are aligned. Start moments of uplink and downlink slots of the terminal device need to be determined based on the start moment of the uplink and downlink slots of the network device and time of signal propagation between the network device and the terminal device. As shown in FIG. 5, because the time of signal propagation between the network device and the terminal device is T, a signal sent by the network device at time t is not received on a terminal device side until t+T. Therefore, the start moment of the downlink slot of the terminal device is later than the start moment of the downlink slot of the network device by the time T. In addition, because the time of signal propagation between the network device and the terminal device is T, a signal sent by the terminal device at time t-T is not received by the network device until the time t. Therefore, the start moment of the uplink slot of the terminal device is earlier than the start moment of the uplink slot of the network device by the time T. Therefore, the start moment of the uplink slot of the terminal device is earlier than the start moment of the downlink slot of the terminal device by time 2T. A time difference (namely, 2T) between the start moment of the uplink slot of the terminal device and the start moment of the downlink slot of the terminal device is also referred to as the TA value. For downlink transmission, the terminal device determines the start moment (namely, t+T) of the downlink slot of the terminal device by measuring a downlink pilot signal, and receives a downlink signal based on the start moment of the downlink slot. For uplink transmission, the terminal device needs to determine that the TA value is 2T and determine the start moment (namely, the start moment of the downlink slot-the TA value, namely, t-T) of the uplink slot based on the timing advance and the start moment of the downlink slot, to send an uplink signal.

The TA value may be obtained through the random access procedure. Specifically, the terminal device sends a random access request to the network device. The random access request is sent by using the downlink slot of the terminal device. That is, the terminal device starts to send the random access request at the start moment t+T of the downlink slot of the terminal device. It further needs to take the time T for the random access request to reach the network device. That is, the network device receives the random access request at the time t+T. Consequently, the time at which the random access request is received is later than the start moment of the uplink slot of the network device by the time 2T. The time 2T is the TA value of the terminal device. The network device may obtain the TA value 2T by subtracting the start moment t of the uplink slot of the network device from the time (namely, the time t+2T) at which the random access request is received. The network device sends a random access response to the terminal device, and sends the TA value to the terminal device via the random access response. The terminal device may determine the TA value corresponding to the terminal device, and perform transmission by using the TA value in subsequent uplink transmission.

The foregoing describes a TA value obtaining mechanism in the single-TRP transmission mode. In the single-TRP transmission mode, the terminal device needs to determine only one TA value for each serving cell. In the multi-TRP transmission mode, the terminal device needs to send an uplink signal to two TRPs. Because transmission delays from the terminal device to the two TRPs may be different, TA values used by the terminal device when the terminal device sends the uplink signal to the two TRPs may also be different. In this case, the terminal device needs to obtain the TA values respectively corresponding to the two TRPs.

In the multi-TRP transmission mode, the network device sends the PDCCH to the terminal device, to trigger the terminal device to initiate the random access request. However, there are a plurality of TRPs in the multi-TRP transmission mode, and the terminal device cannot learn of a TRP to which the random access request should be sent. Therefore, the terminal device cannot send the random access request based on a correct path loss. Consequently, the terminal device cannot obtain the TA value in the multi-TRP transmission mode. This application provides the corresponding technical solutions, so that the terminal device selects an appropriate path loss to send the random access request, to enable obtaining of the TA value in the multi-TRP transmission mode.

In this application, a path loss may also be referred to as path attenuation, a path loss resource may also be referred to as a path attenuation resource, a path loss measurement resource, a path attenuation measurement resource, or a reference signal resource. A name of the path loss resource is not specifically limited in this application.

The following describes the technical solutions in this application with reference to specific embodiments.

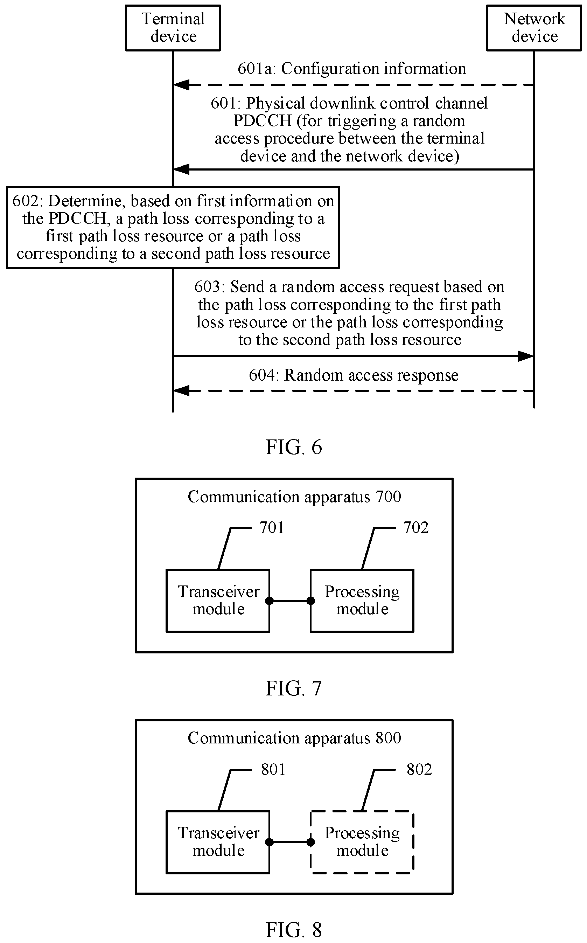

FIG. 6 is a diagram of an embodiment of a random access method according to embodiments of this application. Refer to FIG. 6. The method includes the following steps.

601: A network device sends a PDCCH to a terminal device, where the PDCCH is for triggering a random access procedure between the terminal device and the network device. Accordingly, the terminal device receives the PDCCH from the network device.

The PDCCH indicates the terminal device to send a random access request to the network device. The random access procedure triggered by using the PDCCH may include the following step 603. Optionally, the random access procedure further includes the following step 604.

Optionally, the PDCCH includes at least one of the following: a random access preamble identifier, an SSB identifier, or a cell identity. The PDCCH may further include other information. This is not specifically limited in this application.

The random access preamble identifier indicates a random access preamble (preamble). The terminal device may send the random access preamble to the network device. It should be noted that, that the terminal device sends the random access request to the network device is essentially that the terminal device sends the random access preamble to the network device.

The SSB identifier indicates a beam for sending the random access preamble. For example, the terminal device determines a receive beam corresponding to the SSB identifier, and determines a corresponding transmit beam based on the receive beam. The terminal device sends the random access preamble by using the transmit beam.

The cell identity indicates a cell to which the random access procedure triggered by using the PDCCH is specific, so that the terminal device determines to send the random access request by using the random access preamble and the SSB identifier that are of the cell indicated by the cell identity.

Optionally, the embodiment shown in FIG. 6 further includes step 601a. Step 601a may be performed before step 601.

601a: The network device sends configuration information to the terminal device. Accordingly, the terminal device receives the configuration information from the network device.

The configuration information includes a configuration parameter of a serving cell. For example, the configuration parameter of the serving cell includes related parameters of uplink timing, for example, a TAG, a control channel group identifier, and a related parameter of an additional cell associated with the serving cell.

602: The terminal device determines, based on first information on the PDCCH, a path loss corresponding to a first path loss resource or a path loss corresponding to a second path loss resource.

The path loss corresponding to the first path loss resource is a signal propagation path loss that is between the terminal device and the network device and that is obtained by the terminal device by measuring the first path loss resource. In other words, the path loss corresponding to the first path loss resource is a signal propagation path loss that is between the terminal device and the network device and that is obtained by the terminal device by measuring a first path loss signal carried on the first path loss resource. The first path loss signal may also be referred to as a first reference signal or a first downlink reference signal. Specifically, the network device sends the first path loss signal to the terminal device. Accordingly, the terminal device receives the first path loss signal from the network device, and measures the first path loss signal to obtain the signal propagation path loss between the terminal device and the network device.

The path loss corresponding to the second path loss resource is a signal propagation path loss that is between the terminal device and the network device and that is obtained by the terminal device by measuring the second path loss resource. In other words, the path loss corresponding to the first path loss resource is a signal propagation path loss that is between the terminal device and the network device and that is obtained by the terminal device by measuring a second path loss signal carried on the second path loss resource. The second path loss signal may also be referred to as a second reference signal or a second downlink reference signal. Specifically, the network device sends the second path loss signal to the terminal device. Accordingly, the terminal device receives the second path loss signal from the network device, and measures the second path loss signal to obtain the signal propagation path loss between the terminal device and the network device.

Optionally, the first path loss resource may include any one of the following: a demodulation reference signal (demodulation reference signal, DMRS) resource indicated on the PDCCH, a QCL resource used for the PDCCH, a QCL resource in a TCI state used for the PDCCH, a QCL resource in a 1^{st} TCI state in two downlink TCI states indicated by the network device to the terminal device, or a QCL resource in a 2^{nd} TCI state in the two downlink TCI states indicated by the network device to the terminal device.

Optionally, the second path loss resource may include any one of the following: an SSB resource indicated on the PDCCH, a QCL resource in one TCI state indicated by the network device to the terminal device or activated by the network device for the terminal device (for example, a QCL resource in a 1^{st} or 2^{nd} TCI state indicated by the network device to the terminal device or activated by the network device for the terminal device), a path loss resource associated with the TCI state indicated by the network device to the terminal device or activated by the network device for the terminal device (for example, a path loss resource associated with the 1^{st} or 2^{nd} TCI state indicated by the network device to the terminal device or activated by the network device for the terminal device), a QCL resource in a TCI state associated with a TRP, a TAG, or a control channel group corresponding to the random access procedure triggered by using the PDCCH, or a path loss resource associated with the TCI state associated with the TRP, the TAG, or the control channel group corresponding to the random access procedure triggered by using the PDCCH. The PDCCH is the PDCCH for triggering the random access procedure, namely, a PDCCH for carrying the following indication information. The TCI-state associated with the TRP, the TAG, or a control channel group identifier corresponding to the random access procedure may be a TCI-state that is in a plurality of (for example, two) TCI-states indicated by the network device to the terminal device and that is associated with the TRP, the TAG, or the control channel group identifier corresponding to the random access procedure. The TCI-state associated with the TRP, the TAG, or a control channel group identifier corresponding to the random access procedure may be one TCI-state, for example, a TCI-state with a smallest index or a TCI-state corresponding to a smallest TCI field value, in a group of TCI-states that is in a plurality of groups of TCI-states activated by the network device for the terminal device and that is associated with the TRP, the TAG, or the control channel group identifier corresponding to the random access procedure. Association between the TAG and the TCI-state may be indicated by a configuration message. For example, one associated TAG is configured for each TCI-state. Association between the control channel group and the TCI-state may be indicated by MAC CE signaling. For example, a group of TCI-states and a control channel group identifier associated with the group of TCI-states are indicated by the MAC CE. Association between the control channel group and the TCI-state may be indicated by DCI signaling. For example, if a TCI-state is indicated by DCI corresponding to a control channel group identifier, the TCI-state is associated with the control channel group identifier.

In an implementation, the second path loss resource is the SSB resource indicated on the PDCCH. It may be further specified that the SSB resource needs to be a QCL resource corresponding to one of the two TCI-states indicated by the network device to the terminal device, or a QCL resource of the QCL resource. Alternatively, the SSB resource needs to be a path loss resource corresponding to one of the two TCI-states indicated by the network device to the terminal device, or a QCL resource of the path loss resource. The foregoing constraint is to ensure that an SSB indicated on the PDCCH is a QCL resource or a path loss resource corresponding to a TCI-state being used by the terminal device, and a complexity requirement on the terminal device is lower.

In another implementation, the second path loss resource is the SSB resource indicated on the PDCCH. It may be further specified that the SSB resource needs to be a QCL resource corresponding to one of TCI-states activated by the network device for the terminal device, or a QCL resource of the QCL resource. Alternatively, the SSB resource needs to be a path loss resource corresponding to one of TCI-states activated by the network device for the terminal device, or a QCL resource of the path loss resource. The foregoing constraint is to ensure that an SSB indicated on the PDCCH is the QCL resource or the path loss resource corresponding to the TCI-state activated by the network device for the terminal device. A quantity of the activated TCI-states is greater than a quantity of the indicated TCI-states. Therefore, this implementation has a higher complexity requirement on the terminal device. The terminal device may report, through a terminal capability reporting process, whether the terminal device supports this implementation. For example, it is specified in a protocol that the terminal device may support the previous implementation by default, and whether the another implementation is supported needs to be reported to the network device by using a terminal capability parameter.

It should be understood that the first path loss resource and the second path loss resource in this application are not limited to the foregoing definitions, and may be other resources. In other words, when the first path loss resource and the second path loss resource are the other resources, the solutions in this application are still applicable.

When sending the random access request, the terminal device needs to calculate a transmit power for sending the random access request. In addition, to calculate the transmit power for sending the random access request, the terminal device needs to determine a path loss generated by signal transmission between the terminal device and the network device. The terminal device may determine the path loss between the terminal device and the network device by measuring a downlink reference signal. However, in a multi-TRP transmission mode, transmit powers for sending the random access request to different TRPs by the terminal device are different because a signal sent by the terminal device to the different TRPs experiences different propagation path losses. Therefore, to calculate a correct transmit power by using a correct path loss, the terminal device needs to determine a TRP to which the random access procedure triggered by using the PDCCH is specific, namely, a TRP to which the terminal device should send the random access request. This application mainly relates to two scenarios: an intra-TRP triggered random access procedure and an inter-TRP triggered random access procedure.

The intra-TRP triggered random access procedure means that a TRP for sending the PDCCH and a TRP for receiving the random access request of the terminal device (namely, the TRP corresponding to the random access procedure triggered by using the PDCCH, where it may be specifically understood as that the terminal device initiates the random access procedure to the TRP) are a same TRP. In case of the intra-TRP triggered random access procedure, the random access request that the PDCCH is for triggering the terminal device to send is sent to the TRP for sending the PDCCH.

The inter-TRP triggered random access procedure means that a TRP for sending the PDCCH and a TRP for receiving the random access request of the terminal device (namely, the TRP corresponding to the random access procedure triggered by using the PDCCH, where it may be specifically understood as that the terminal device initiates the random access procedure to the TRP) are different TRPs. For example, if a TRP 1 sends the PDCCH to the terminal device, and the TRP corresponding to the random access procedure triggered by using the PDCCH is a TRP 2, the terminal device sends the random access request to the TRP 2.

In different scenarios, path loss resources used by the terminal device for path loss calculation are different. The terminal device needs to distinguish between the foregoing two scenarios, so that the terminal device calculates the path loss between the terminal device and the network device by using a correct path loss resource.

The first information on the PDCCH is for determining the first path loss resource or the second path loss resource. Alternatively, the first information on the PDCCH is for determining the path loss that corresponds to the first path loss resource and that is for sending the random access request, or is for determining the path loss that corresponds to the second path loss resource and that is for sending the random access request. Alternatively, the first information on the PDCCH is for determining to send the random access request based on the path loss corresponding to the first path loss resource, or is for determining to send the random access request based on a path loss corresponding to a second path resource. For a specific implementation, refer to related descriptions in the following step 603.

Optionally, the first information on the PDCCH is a first field on the PDCCH. For some possible implementations of the first field, refer to related descriptions in the following step 603.

603: The terminal device sends the random access request to the network device based on the path loss corresponding to the first path loss resource or the path loss corresponding to the second path loss resource. Accordingly, the network device receives the random access request from the terminal device.

The terminal device calculates, based on the path loss corresponding to the first path loss resource, a first transmit power for sending the random access request, and sends the random access request to the network device at the first transmit power. Alternatively, the terminal device calculates, based on the path loss corresponding to the second path loss resource, a second transmit power for sending the random access request, and sends the random access request to the network device at the second transmit power.

With reference to the some possible implementations of the first field on the PDCCH, the following describes a case in which the terminal device sends the random access request based on the path loss corresponding to the first path loss resource or sends the random access request based on the path loss corresponding to the second path loss resource. This application is still applicable to another implementation. This is not specifically limited in this application.

Implementation 1: The first field indicates a TAG. The TAG indicated by the first field represents the TAG corresponding to the random access procedure triggered by using the PDCCH. If the TAG indicated by the first field is the same as a TAG associated with the TCI state used for the PDCCH, the random access request is sent based on the path loss corresponding to the first path loss resource; or if the TAG indicated by the first field is different from a TAG associated with the TCI state used for the PDCCH, the random access request is sent based on the path loss corresponding to the second path loss resource.

Specifically, the first field indicates one TAG, where the TAG is the TAG corresponding to the random access procedure triggered by using the PDCCH. In other words, the TAG indicated by the first field is the TAG corresponding to the random access procedure triggered by using the PDCCH. A TAG corresponds to a TRP. That is, in the multi-TRP transmission mode, each TRP corresponds to one TAG, and different TRPs correspond to different TAGs. Therefore, the network device may indicate, by using the TAG indicated by the first field, the TRP to which the random access procedure triggered by using the PDCCH is specific. That is, the TAG corresponding to the random access procedure triggered by using the PDCCH may be understood as a TAG corresponding to the TRP to which the random access procedure triggered by using the PDCCH is specific. That is, the random access procedure triggered by using the PDCCH is performed between the terminal device and the TRP to which the random access procedure triggered by using the PDCCH is specific. In addition, the TCI state used for the PDCCH is associated with one TAG.

The terminal device determines whether the TAG indicated by the first field is the same as the TAG associated with the TCI state used for the PDCCH. If the TAGs are the same, the terminal device may determine that the random access procedure triggered by using the PDCCH is the intra-TRP triggered random access procedure, and the terminal device sends the random access request based on the path loss corresponding to the first path loss resource. If the TAGs are different, the terminal device may determine that the random access procedure triggered by using the PDCCH is the inter-TRP triggered random access procedure. That is, the terminal device sends the random access request based on the path loss corresponding to the second path loss resource. It can be learned that the terminal device determines, in an implicit manner (through TAG comparison), the TRP to which the random access procedure triggered by using the PDCCH is specific, so that the terminal device determines an appropriate path loss, and sends the random access request based on the path loss, to implement a TRP-specific random access procedure.

Implementation 2: The first field indicates whether the TAG corresponding to the random access procedure triggered by using the PDCCH is the same as a TAG associated with the TCI state used for the PDCCH. If the TAGs are the same, the random access request is sent based on the path loss corresponding to the first path loss resource; or if the TAGs are different, the random access request is sent based on the path loss corresponding to the second path loss resource.

If the TAGs are the same, the terminal device may determine that the random access procedure triggered by using the PDCCH is the intra-TRP triggered random access procedure. Therefore, the terminal device may send the random access request based on the path loss corresponding to the first path loss resource. If the TAGs are different, the terminal device may determine that the random access procedure triggered by using the PDCCH is the inter-TRP triggered random access procedure. Therefore, the terminal device may send the random access request based on the path loss corresponding to the second path loss resource.

Implementation 3: The first field indicates a control channel group identifier (CORESETPoolIndex). If the control channel group identifier indicated by the first field is the same as a control channel group identifier corresponding to the PDCCH, the random access request is sent based on the path loss corresponding to the first path loss resource; or if the control channel group identifier indicated by the first field is different from a control channel group identifier corresponding to the PDCCH, the random access request is sent based on the path loss corresponding to the second path loss resource.

Specifically, the first field indicates one control channel group identifier, where the control channel group identifier is the control channel group identifier corresponding to the random access procedure triggered by using the PDCCH. The control channel group identifier corresponding to the random access procedure triggered by using the PDCCH may be understood as a control channel group identifier corresponding to the TRP to which the random access procedure triggered by using the PDCCH is specific. In addition, the PDCCH corresponds to one control channel group identifier. In the multi-TRP transmission mode, each TRP corresponds to one control channel group identifier, and different TRPs correspond to different control channel group identifiers.

The terminal device determines whether the control channel group identifier indicated by the first field is the same as the control channel group identifier corresponding to the PDCCH. If the control channel group identifiers are the same, the terminal device may determine that the random access procedure triggered by using the PDCCH is the intra-TRP triggered random access procedure, and the terminal device sends the random access request based on the path loss corresponding to the first path loss resource. If the control channel group identifiers are different, the terminal device may determine that the random access procedure triggered by using the PDCCH is the inter-TRP triggered random access procedure. That is, the terminal device sends the random access request based on the path loss corresponding to the second path loss resource. It can be learned that the terminal device determines, in an implicit manner (through control channel group identifier comparison), the TRP to which the random access procedure triggered by using the PDCCH is specific, so that the terminal device determines an appropriate path loss, and sends the random access request based on the path loss, to implement a TRP-specific random access procedure.

Implementation 4: The first field indicates whether the control channel group identifier corresponding to the random access procedure triggered by using the PDCCH is the same as a control channel group identifier corresponding to the PDCCH. If the control channel group identifiers are the same, the random access request is sent based on the path loss corresponding to the first path loss resource; or if the control channel group identifiers are different, the random access request is sent based on the path loss corresponding to the second path loss resource.

If the control channel group identifiers are the same, the terminal device may determine that the random access procedure triggered by using the PDCCH is the intra-TRP triggered random access procedure. Therefore, the terminal device may send the random access request based on the path loss corresponding to the first path loss resource. If the control channel group identifiers are different, the terminal device may determine that the random access procedure triggered by using the PDCCH is the inter-TRP triggered random access procedure. Therefore, the terminal device may send the random access request based on the path loss corresponding to the second path loss resource.

Implementation 5: The first field indicates that the random access procedure is a first-type random access procedure or a second-type random access procedure. If the random access procedure is the first-type random access procedure, the random access request is sent based on the path loss corresponding to the first path loss resource; or if the random access procedure is the second-type random access procedure, the random access request is sent based on the path loss corresponding to the second path loss resource. In other words, if the random access procedure is the first-type random access procedure, the terminal device may determine that the random access procedure triggered by using the PDCCH is the intra-TRP triggered random access procedure, and the terminal device sends the random access request based on the path loss corresponding to the first path loss resource. If the random access procedure is the second-type random access procedure, the terminal device may determine that the random access procedure triggered by using the PDCCH is the inter-TRP triggered random access procedure, and the terminal device sends the random access request based on the path loss corresponding to the second path loss resource. It can be learned that the terminal device determines, in an explicit manner (the first field on the PDCCH), the TRP to which the random access procedure triggered by using the PDCCH is specific, so that the terminal device determines an appropriate path loss, and sends the random access request based on the path loss, to implement a TRP-specific random access procedure.

The following describes several possible definition manners of the first-type random access procedure. This application is still applicable to another definition manner. This is not specifically limited in this application.

Manner 1: The first-type random access procedure is a random access procedure (the first-type random access procedure) corresponding to a TRP that is the same as the TRP for sending the PDCCH. In other words, the TRP corresponding to the first-type random access procedure is the same as the TRP for sending the PDCCH. In other words, if the TRP corresponding to the random access procedure is the same as the TRP for sending the PDCCH, the random access procedure is the first-type random access procedure.

Manner 2: The first-type random access procedure is a random access procedure (the first-type random access procedure) corresponding to a TAG that is the same as a TAG associated with the TCI state used for the PDCCH. In other words, the TAG corresponding to the first-type random access procedure is the same as the TAG associated with the TCI state used for the PDCCH. In other words, if the TAG corresponding to the random access procedure is the same as the TAG associated with the TCI state used for the PDCCH, the random access procedure is the first-type random access procedure.

Manner 3: The first-type random access procedure is a random access procedure (the first-type random access procedure) corresponding to a control channel group identifier that is the same as a control channel group identifier corresponding to the PDCCH. In other words, the control channel group identifier corresponding to the first-type random access procedure is the same as the control channel group identifier corresponding to the PDCCH. In other words, if the control channel group identifier corresponding to the random access procedure is the same as the control channel group identifier corresponding to the PDCCH, the random access procedure is the first-type random access procedure.

The following describes several possible definition manners of the second-type random access procedure. This application is still applicable to another definition manner. This is not specifically limited in this application.

Manner 1: The second-type random access procedure is a random access procedure (the second-type random access procedure) corresponding to a TRP that is different from the TRP for sending the PDCCH. In other words, a TAG corresponding to the second-type random access procedure is the same as the TRP for sending the PDCCH. In other words, if the TRP corresponding to the random access procedure is different from the TRP for sending the PDCCH, the random access procedure is the second-type random access procedure.

Manner 2: The second-type random access procedure is a random access procedure (the first-type random access procedure) corresponding to a TAG that is different from a TAG associated with the TCI state used for the PDCCH. In other words, the TAG corresponding to the second-type random access procedure is different from the TAG associated with the TCI state used for the PDCCH. In other words, if the TAG corresponding to the random access procedure is different from the TAG associated with the TCI state used for the PDCCH, the random access procedure is the second-type random access procedure.

Manner 3: The second-type random access procedure is a random access procedure (the second-type random access procedure) corresponding to a control channel group identifier that is different from a control channel group identifier corresponding to the PDCCH. In other words, the control channel group identifier corresponding to the second-type random access procedure is different from the control channel group identifier corresponding to the PDCCH. In other words, if the control channel group identifier corresponding to the random access procedure is different from the control channel group identifier corresponding to the PDCCH, the random access procedure is the second-type random access procedure.

Implementation 6: The first field indicates to send the random access request based on the path loss corresponding to the first path loss resource, or indicates to send the random access request based on the path loss corresponding to the second path loss resource. In this way, the terminal device sends the random access request based on the path loss corresponding to the path loss resource and indicated by the first field. It can be learned that the terminal device determines, in an explicit manner (the first field on the PDCCH), the TRP to which the random access procedure triggered by using the PDCCH is specific, so that the terminal device determines an appropriate path loss, and sends the random access request based on the path loss, to implement a TRP-specific random access procedure.

Implementation 7: The first field indicates an SSB resource. If a TAG associated with the SSB resource indicated by the first field is the same as a TAG associated with the TCI state used for the PDCCH, the random access request is sent based on the path loss corresponding to the first path loss resource; or if a TAG associated with the SSB resource indicated by the first field is different from a TAG associated with the TCI state used for the PDCCH, the random access request is sent based on the path loss corresponding to the second path loss resource.

Specifically, the first field indicates the SSB resource, where the SSB resource is associated with one TAG. Specifically, the network device may configure a correspondence between the SSB resource and the TAG by using RRC signaling. In addition, the TCI state used for the PDCCH is associated with one TAG. A TAG corresponds to a TRP. That is, in the multi-TRP transmission mode, each TRP corresponds to one TAG, and different TRPs correspond to different TAGs. Therefore, the network device may indicate, by using the TAG associated with the SSB resource indicated by the first field, the TRP to which the random access procedure triggered by using the PDCCH is specific. That is, the TAG corresponding to the random access procedure triggered by using the PDCCH may be understood as a TAG corresponding to the TRP to which the random access procedure triggered by using the PDCCH is specific. That is, the random access procedure triggered by using the PDCCH is performed between the terminal device and the TRP to which the random access procedure triggered by using the PDCCH is specific.

The terminal device determines whether the TAG associated with the SSB resource indicated by the first field is the same as the TAG associated with the TCI state used for the PDCCH. If the TAGs are the same, the terminal device may determine that the random access procedure triggered by using the PDCCH is the intra-TRP triggered random access procedure, and the terminal device sends the random access request based on the path loss corresponding to the first path loss resource. If the TAGs are different, the terminal device may determine that the random access procedure triggered by using the PDCCH is the inter-TRP triggered random access procedure. That is, the terminal device sends the random access request based on the path loss corresponding to the second path loss resource. It can be learned that the terminal device determines, in an implicit manner (through TAG comparison), the TRP to which the random access procedure triggered by using the PDCCH is specific, so that the terminal device determines an appropriate path loss, and sends the random access request based on the path loss, to implement a TRP-specific random access procedure.

Optionally, when a first condition is satisfied, the PDCCH includes the first information. The first condition includes one or more of the following:
1. Two TAGs are configured in the serving cell corresponding to the PDCCH.

In an intra-cell multi-TRP transmission mode, the serving cell corresponding to the PDCCH includes two TRPs, each TRP corresponds to one TAG, and different TRPs correspond to different TAGs. The TAG corresponding to each TRP is for managing a TA value corresponding to the TRP. Two TAGs corresponding to the two TRPs may be understood as the two TAGs configured in the serving cell corresponding to the PDCCH.

2. Two control channel groups are configured in the serving cell corresponding to the PDCCH.

In an intra-cell multi-TRP transmission mode, the serving cell corresponding to the PDCCH includes two TRPs, each TRP corresponds to one control channel group, and different TRPs correspond to different control channel groups. Two control channel groups corresponding to the two TRPs may be understood as the two control channel groups configured in the serving cell corresponding to the PDCCH.

3. No associated additional cell is configured in the serving cell corresponding to the PDCCH.

In an intra-cell multi-TRP transmission mode, the serving cell corresponding to the PDCCH includes two TRPs, and no associated additional cell is configured in the serving cell.

In other words, when the first condition is satisfied, the network device sends the PDCCH to the terminal device, where the PDCCH includes the first information. That is, in the intra-cell multi-TRP transmission mode, the terminal device may determine, by using any one of the foregoing implementation 1 to implementation 7, the path loss for sending the random access request.

The following shows some possible implementations of the first condition. In a possible implementation, the first condition includes: The two TAGs are configured in the serving cell corresponding to the PDCCH, and no associated additional cell is configured in the serving cell corresponding to the PDCCH. In another possible implementation, the two control channel groups are configured in the serving cell corresponding to the PDCCH, and no associated additional cell is configured in the serving cell corresponding to the PDCCH. In still another possible implementation, the first condition includes: The two TAGs are configured in the serving cell corresponding to the PDCCH, the two control channel groups are configured in the serving cell corresponding to the PDCCH, and no associated additional cell is configured in the serving cell corresponding to the PDCCH.

Optionally, when the first condition is satisfied, the terminal device determines, by using the foregoing implementation 5, the path loss for sending the random access request.

Implementation 8: In an intra-cell multi-TRP transmission mode and an inter-cell multi-TRP transmission mode, meanings indicated by the first field are different. In other words, in both the intra-cell multi-TRP transmission mode and the inter-cell multi-TRP transmission mode, there is a first field on the PDCCH. When a second condition is satisfied, the first field may be parsed by using any one of the foregoing implementation 1 to implementation 6. For example, the first field indicates the TAG; the first field indicates whether the TAG corresponding to the random access procedure is the same as the TAG corresponding to the TCI state used for the PDCCH; the first field indicates the control channel group identifier; the first field indicates whether the control channel group identifier corresponding to the random access procedure is the same as the control channel group identifier corresponding to the PDCCH; the first field indicates that the random access procedure is the first-type random access procedure or the second-type random access procedure; or the first field indicates to send the random access request based on the path loss corresponding to the first path loss resource, or indicates to send the random access request based on the path loss corresponding to the second path loss resource, where the second condition includes one or more of the following: Two TAGs are configured in the serving cell corresponding to the PDCCH; two control channel groups are configured in the serving cell corresponding to the PDCCH; or no associated additional cell is configured in the serving cell corresponding to the PDCCH. That is, in the intra-cell multi-TRP transmission mode, the first field may be parsed by using the foregoing implementation 1 to implementation 6. For details, refer to the related descriptions in the foregoing implementation 1 to implementation 6. Details are not described herein again.

The following describes some possible implementations of the second condition. In a possible implementation, the second condition includes: The two TAGs are configured in the serving cell corresponding to the PDCCH, and no associated additional cell is configured in the serving cell corresponding to the PDCCH. In another possible implementation, the two control channel groups are configured in the serving cell corresponding to the PDCCH, and no associated additional cell is configured in the serving cell corresponding to the PDCCH. In still another possible implementation, the two TAGs are configured in the serving cell corresponding to the PDCCH, the two control channel groups are configured in the serving cell corresponding to the PDCCH, and no associated additional cell is configured in the serving cell corresponding to the PDCCH.

When a third condition is satisfied, the first field indicates that a cell corresponding to the random access procedure is the serving cell corresponding to the PDCCH, or indicates that the cell corresponding to the random access procedure is an activated additional cell associated with the serving cell, where
the third condition includes at least one of the following:
1. Two TAGs are configured in the serving cell corresponding to the PDCCH.

In the inter-cell multi-TRP transmission mode, the serving cell corresponding to the PDCCH corresponds to one TRP, and the activated additional cell associated with the serving cell corresponds to another TRP. Each TRP corresponds to one TAG, and different TRPs correspond to different TAGs. The TAG corresponding to each TRP is for managing a TA value corresponding to the TRP. Two TAGs corresponding to the two TRPs may be understood as the two TAGs configured in the serving cell corresponding to the PDCCH.

2. Two control channel groups are configured in the serving cell corresponding to the PDCCH.

In the inter-cell multi-TRP transmission mode, the serving cell corresponding to the PDCCH corresponds to one TRP, and the activated additional cell associated with the serving cell corresponds to another TRP. Each TRP corresponds to one control channel group, and different TRPs correspond to different control channel groups. Two control channel groups corresponding to the two TRPs may be understood as the two control channel groups configured in the serving cell corresponding to the PDCCH.

3. An associated additional cell is configured in the serving cell corresponding to the PDCCH.

In the inter-cell multi-TRP transmission mode, an associated additional cell is configured in the serving cell corresponding to the PDCCH, where the serving cell corresponds to one TRP, and the activated additional cell associated with the serving cell corresponds to another TRP.

The following describes some possible implementations of the third condition. In a possible implementation, the third condition includes: The two TAGs are configured in the serving cell corresponding to the PDCCH, and the associated additional cell is configured in the serving cell corresponding to the PDCCH. In another possible implementation, the third condition includes: The two control channel groups are configured in the serving cell corresponding to the PDCCH, and the associated additional cell is configured in the serving cell corresponding to the PDCCH. In still another possible implementation, the two TAGs are configured in the serving cell corresponding to the PDCCH, the two control channel groups are configured in the serving cell corresponding to the PDCCH, and the associated additional cell is configured in the serving cell corresponding to the PDCCH.

That is, in the inter-cell multi-TRP transmission mode, the first field indicates that the cell corresponding to the random access procedure is the serving cell corresponding to the PDCCH, or indicates that the cell corresponding to the random access procedure is the activated additional cell associated with the serving cell. The following describes a specific implementation process in which the terminal device determines the path loss for sending the random access request.

If the PDCCH is sent by using the serving cell corresponding to the PDCCH, and the first field indicates that the cell corresponding to the random access procedure is the serving cell corresponding to the PDCCH, the random access request is sent based on the path loss corresponding to the first path loss resource; if the PDCCH is sent by using the serving cell corresponding to the PDCCH, and the first field indicates that the cell corresponding to the random access procedure is the activated additional cell associated with the serving cell corresponding to the PDCCH, the random access request is sent based on the path loss corresponding to the second path loss resource; if the PDCCH is sent by using the activated additional cell associated with the serving cell corresponding to the PDCCH, and the first field indicates that the cell corresponding to the random access procedure is the serving cell corresponding to the PDCCH, the random access request is sent based on the path loss corresponding to the second path loss resource; or if the PDCCH is sent by using the activated additional cell associated with the serving cell corresponding to the PDCCH, and the first field indicates that the cell corresponding to the random access procedure is the activated additional cell associated with the serving cell corresponding to the PDCCH, the random access request is sent based on the path loss corresponding to the first path loss resource.

Alternatively, in other words, if a TAG associated with the TCI state used for the PDCCH is the same as a TAG corresponding to the cell indicated by the first field on the PDCCH, the random access request is sent based on the path loss corresponding to the first path loss resource; or if a TAG associated with the TCI state used for the PDCCH is different from a TAG corresponding to the cell indicated by the first field on the PDCCH, the random access request is sent based on the path loss corresponding to the second path loss resource. The TAG corresponding to the cell indicated by the first field on the PDCCH may be determined based on a TAG associated with a TCI state used for the cell. For example, TCI states used for the activated additional cell associated with the serving cell corresponding to the PDCCH include an identifier of the additional cell. The terminal device may determine, based on the identifier, which TCI states are the TCI states used for the activated additional cell associated with the serving cell corresponding to the PDCCH, and then further determine TAGs associated with the TCI states, to determine TAGs corresponding to the activated additional cell associated with the serving cell. TCI states used for the serving cell do not include the identifier of the additional cell. The terminal device determines the TCI states that do not include the identifier of the additional cell, and then determines TAGs associated with the TCI states, to determine TAGs corresponding to the serving cell. The TAG corresponding to the cell indicated on the PDCCH may alternatively be determined according to a specific rule. For example, it is specified that the serving cell corresponding to the PDCCH corresponds to a 1^{st} TAG in the serving cell, and the activated additional cell associated with the serving cell corresponding to the PDCCH corresponds to a 2^{nd} TAG in the serving cell.

In the implementation 8, optionally, when a fourth condition is satisfied, the PDCCH includes the first field, where the fourth condition includes one or two of the following: Two TAGs are configured in the serving cell corresponding to the PDCCH; or two control channel groups are configured in the serving cell corresponding to the PDCCH. That is, when the fourth condition is satisfied, the network device sends the PDCCH to the terminal device, where the PDCCH includes the first field. In other words, when the fourth condition is satisfied, the terminal device uses the multi-TRP transmission mode.

Further, when the second condition is satisfied, the terminal device uses the intra-cell TRP transmission mode; or when the third condition is satisfied, the terminal device uses the inter-cell multi-TRP transmission mode. The following shows some preferred solutions of the second condition, the third condition, and the fourth condition.

When the fourth condition is satisfied, the PDCCH includes the first field. Based on this, when the second condition is satisfied, a meaning indicated by the first field is a meaning indicated in any one of the foregoing implementation 1 to implementation 6. In a possible implementation, the fourth condition includes: The two TAGs are configured in the serving cell corresponding to the PDCCH. In addition, the second condition includes: No associated additional cell is configured in the serving cell corresponding to the PDCCH. In another possible implementation, the fourth condition includes: The two control channel groups are configured in the serving cell corresponding to the PDCCH. In addition, the second condition includes: No associated additional cell is configured in the serving cell corresponding to the PDCCH. In still another possible implementation, the fourth condition includes: The two TAGs are configured in the serving cell corresponding to the PDCCH, and the two control channel groups are configured in the serving cell corresponding to the PDCCH. In addition, the second condition includes: No associated additional cell is configured in the serving cell corresponding to the PDCCH.

Optionally, the embodiment shown in FIG. 6 further includes step 604. Step 604 may be performed after step 603.

604: The network device sends a random access response to the terminal device. Accordingly, the terminal device receives the random access response from the network device.

Optionally, the random access response includes a second field, and the second field indicates a TAG corresponding to a TA value carried in the random access response.

Based on the implementation 1 or the implementation 8 of the first field in the foregoing step 603, in a possible implementation, the TAG indicated by the second field is the same as the TAG indicated by the first field. In this way, a case in which the TAGs corresponding to the random access procedure are different is avoided, and the TAGs corresponding to the random access procedure are aligned.

Based on the implementation 2 or the implementation 8 of the first field in the foregoing step 603, in a possible implementation, based on the first field, if the first field indicates that the TAG corresponding to the random access procedure triggered by using the PDCCH is the same as the TAG associated with the TCI state used for the PDCCH, the TAG indicated by the second field is the same as the TAG associated with the TCI state used for the PDCCH; or if the first field indicates that the TAG corresponding to the random access procedure triggered by using the PDCCH is different from the TAG associated with the TCI state used for the PDCCH, the TAG indicated by the second field is different from the TAG associated with the TCI state used for the PDCCH.

Based on the implementation 3 or the implementation 8 of the first field in the foregoing step 603, in a possible implementation, if the control channel group identifier indicated by the first field is the same as the control channel group identifier corresponding to the PDCCH, the TAG indicated by the second field is the same as the TAG associated with the TCI state used for the PDCCH; or if the control channel group identifier indicated by the first field is different from the control channel group identifier corresponding to the PDCCH, the TAG indicated by the second field is different from the TAG associated with the TCI state used for the PDCCH.

If the control channel group identifier indicated by the first field is the same as the control channel group identifier corresponding to the PDCCH, it may be understood that the TRP corresponding to the random access procedure triggered by using the PDCCH and a TRP for sending the random access request are a same TRP, which means the intra-cell multi-TRP transmission mode. Therefore, the TAG indicated by the second field should be the same as the TAG associated with the TCI state used for the PDCCH, to avoid a case in which TAGs corresponding to the same TRP are different. If the control channel group identifier indicated by the first field is different from the control channel group identifier corresponding to the PDCCH, it may be understood that the TRP corresponding to the random access procedure triggered by using the PDCCH and a TRP for sending the random access request are not a same TRP, which means the inter-cell multi-TRP transmission mode. The TAG indicated by the second field should be different from the TAG associated with the TCI state used for the PDCCH. In this way, different TRPs correspond to different TAGs.

Based on the implementation 4 or the implementation 8 of the first field in the foregoing step 603, in a possible implementation, if the first field indicates that the control channel group identifier corresponding to the random access procedure triggered by using the PDCCH is the same as the control channel group identifier corresponding to the PDCCH, the TAG indicated by the second field is the same as the TAG associated with the TCI state used for the PDCCH; or if the first field indicates that the control channel group identifier corresponding to the random access procedure triggered by using the PDCCH is different from the control channel group identifier corresponding to the PDCCH, the TAG indicated by the second field is different from the TAG associated with the TCI state used for the PDCCH.

Based on the implementation 5 or the implementation 8 of the first field in the foregoing step 603, in a possible implementation, if the random access procedure is the first-type random access procedure, the TAG indicated by the second field is the same as the TAG associated with the TCI state used for the PDCCH; or if the random access procedure is the second-type random access procedure, the TAG indicated by the second field is different from the TAG associated with the TCI state used for the PDCCH.

If the random access procedure is the first-type random access procedure, which means the intra-cell multi-TRP transmission mode, the TAG indicated by the second field should be the same as the TAG associated with the TCI state used for the PDCCH, to avoid a case in which TAGs corresponding to a same TRP are different. If the random access procedure is the second-type random access procedure, which means the inter-cell multi-TRP transmission mode, the TAG indicated by the second field should be different from the TAG associated with the TCI state used for the PDCCH. In this way, different TRPs correspond to different TAGs.

Based on the implementation 6 or the implementation 8 of the first field in the foregoing step 603, in a possible implementation, if the first field indicates to send the random access request based on the path loss corresponding to the first path loss resource, the TAG indicated by the second field is the same as the TAG associated with the TCI state used for the PDCCH; or if the first field indicates to send the random access request based on the path loss corresponding to the second path loss resource, the TAG indicated by the second field is different from the TAG associated with the TCI state used for the PDCCH.

If the first field indicates to send the random access request based on the path loss corresponding to the first path loss resource, that is, in the intra-cell multi-TRP transmission mode, the terminal device may send the random access request based on the path loss corresponding to the first path loss resource, the TAG indicated by the second field should be the same as the TAG associated with the TCI state used for the PDCCH, to avoid a case in which TAGs corresponding to a same TRP are different. If the first field indicates to send the random access request based on the path loss corresponding to the second path loss resource, that is, in the inter-cell multi-TRP transmission mode, the terminal device may send the random access request based on the path loss corresponding to the second path loss resource, the TAG indicated by the second field should be different from the TAG associated with the TCI state used for the PDCCH.

Based on the implementation 7 or the implementation 8 of the first field in the foregoing step 603, in a possible implementation, if the TAG associated with the SSB resource indicated by the first field is the same as the TAG associated with the TCI state used for the PDCCH, the TAG indicated by the second field is the same as the TAG associated with the TCI state used for the PDCCH; or if the TAG associated with the SSB resource indicated by the first field is different from the TAG associated with the TCI state used for the PDCCH, the TAG indicated by the second field is different from the TAG associated with the TCI state used for the PDCCH.

If the TAG associated with the SSB resource indicated by the first field is the same as the TAG associated with the TCI state used for the PDCCH, that is, in the intra-cell multi-TRP transmission mode, the terminal device may send the random access request based on the path loss corresponding to the first path loss resource, the TAG indicated by the second field should be the same as the TAG associated with the TCI state used for the PDCCH, to avoid a case in which TAGs corresponding to a same TRP are different. If the TAG associated with the SSB resource indicated by the first field is different from the TAG associated with the TCI state used for the PDCCH, that is, in the inter-cell multi-TRP transmission mode, the terminal device may send the random access request based on the path loss corresponding to the second path loss resource, the TAG indicated by the second field should be different from the TAG associated with the TCI state used for the PDCCH.

Optionally, the terminal device determines, based on the second field, a TA value corresponding to the TAG associated with the random access procedure. Optionally, the terminal device may determine, by using the following two possible implementations, the TAG associated with the random access procedure.

Manner 1: The random access request includes a first field, and the first field indicates a TAG. The terminal device determines that the TAG indicated by the first field is the TAG associated with the random access procedure. The method may be used in the intra-cell multi-TRP transmission mode. For example, when the second condition is satisfied, the terminal device determines, by using the method, the TAG associated with the random access procedure.

Manner 2: A third field on the PDCCH indicates that the cell corresponding to the random access procedure is the serving cell corresponding to the PDCCH, or indicates that the cell corresponding to the random access procedure is the activated additional cell associated with the serving cell corresponding to the PDCCH. The random access response message includes one TA value. If the cell corresponding to the random access procedure is the serving cell, the TA value is a TA value corresponding to the 1^{st} TAG in the serving cell corresponding to the PDCCH; or if the cell corresponding to the random access procedure is the activated additional cell associated with the serving cell, the TA value is a TA value corresponding to the 2^{nd} TAG in the serving cell corresponding to the PDCCH. The method may be used in the inter-cell multi-TRP transmission mode. For example, when the third condition is satisfied, the terminal device determines, by using the method, the TAG associated with the random access procedure.

The two TAGs are configured in the serving cell corresponding to the PDCCH. Optionally, the 1^{st} TAG in the serving cell corresponding to the PDCCH may be the 1^{st} TAG with a higher configuration ranking in the two TAGs, and the 2^{nd} TAG in the serving cell corresponding to the PDCCH may be the 2^{nd} TAG with a lower configuration ranking in the two TAGs. Alternatively, the 1^{st} TAG in the serving cell corresponding to the PDCCH may be a TAG with a smaller index in the two TAGs, and the 2^{nd} TAG in the serving cell corresponding to the PDCCH may be a TAG with a larger index in the two TAGs.

In this embodiment of this application, the terminal device receives the PDCCH from the network device, where the PDCCH is for triggering the random access procedure between the terminal device and the network device. The terminal device determines, based on the first information on the PDCCH, the path loss corresponding to the first path loss resource or the path loss corresponding to the second path loss resource, where the first path loss resource is the QCL resource in the TCI state used for the PDCCH, and the second path loss resource is the SSB resource indicated on the PDCCH. The terminal device sends the random access request to the network device based on the path loss corresponding to the first path loss resource or the path loss corresponding to the second path loss resource. In this way, the terminal device selects the appropriate path loss to send the random access request, to enable obtaining of the TA value in the multi-TRP transmission mode.

The following describes communication apparatuses provided in embodiments of this application.

FIG. 7 is a diagram of a structure of a communication apparatus according to an embodiment of this application. Refer to FIG. 7. The communication apparatus 700 may be configured to perform the processes performed by the terminal device in the embodiment shown in FIG. 6. For details, refer to the related descriptions in the foregoing method embodiment.

The communication apparatus 700 includes a transceiver module 701 and a processing module 702.

The processing module 702 is configured to process data. The transceiver module 701 may implement a corresponding communication function. The transceiver module 701 may also be referred to as a communication interface or a communication module.

Optionally, the communication apparatus 700 may further include a storage module. The storage module may be configured to store instructions and/or data. The processing module 702 may read the instructions and/or the data in the storage module, to enable the communication apparatus to implement the foregoing method embodiment.

The communication apparatus 700 may be configured to perform the actions performed by the terminal device in the foregoing method embodiment. The communication apparatus 700 may be a terminal device or a component that may be configured in the terminal device. The processing module 702 is configured to perform the processing-related operation on the terminal device side in the foregoing method embodiment. The transceiver module 701 is configured to perform the receiving-related operation on the terminal device side in the foregoing method embodiment. For example, the communication apparatus 700 is configured to perform the following solution.

The transceiver module 701 is configured to receive a PDCCH from a network device, where the PDCCH is for triggering a random access procedure between the communication apparatus 700 and the network device;
the processing module 702 is configured to determine, based on first information on the PDCCH, a path loss corresponding to a first path loss resource or a path loss corresponding to a second path loss resource, where the first path loss resource is a QCL resource in a TCI state used for the PDCCH, and the second path loss resource is an SSB resource indicated on the PDCCH; and
the transceiver module 701 is further configured to send a random access request to the network device based on the path loss corresponding to the first path loss resource or the path loss corresponding to the second path loss resource.

In a possible implementation, the first information is a first field on the PDCCH.

In another possible implementation, the first field indicates a TAG; and if the TAG indicated by the first field is the same as a TAG associated with the TCI state used for the PDCCH, the random access request is sent based on the path loss corresponding to the first path loss resource; or if the TAG indicated by the first field is different from a TAG associated with the TCI state used for the PDCCH, the random access request is sent based on the path loss corresponding to the second path loss resource.

In another possible implementation, the transceiver module 701 is further configured to receive a random access response from the network device, where the random access response includes a second field, the second field indicates a TAG corresponding to a TA value carried in the random access response, and the TAG indicated by the second field is the same as the TAG indicated by the first field.

In another possible implementation, the first field indicates a control channel group identifier; and if the control channel group identifier indicated by the first field is the same as a control channel group identifier corresponding to the PDCCH, the random access request is sent based on the path loss corresponding to the first path loss resource; or if the control channel group identifier indicated by the first field is different from a control channel group identifier corresponding to the PDCCH, the random access request is sent based on the path loss corresponding to the second path loss resource.

In another possible implementation, the transceiver module 701 is further configured to receive a random access response from the network device, where the random access response includes a second field, and the second field indicates a TAG corresponding to a TA value carried in the random access response message, where if the control channel group identifier indicated by the first field is the same as the control channel group identifier corresponding to the PDCCH, the TAG indicated by the second field is the same as a TAG associated with the TCI state used for the PDCCH; or if the control channel group identifier indicated by the first field is different from the control channel group identifier corresponding to the PDCCH, the TAG indicated by the second field is different from a TAG associated with the TCI state used for the PDCCH.

In another possible implementation, the first field indicates that the random access procedure is a first-type random access procedure or a second-type random access procedure; and if the random access procedure is the first-type random access procedure, the random access request is sent based on the path loss corresponding to the first path loss resource; or if the random access procedure is the second-type random access procedure, the random access request is sent based on the path loss corresponding to the second path loss resource.

In another possible implementation, the first-type random access procedure includes: a random access procedure corresponding to a TRP that is the same as a TRP for sending the PDCCH, where in other words, the TRP corresponding to the first-type random access procedure is the same as the TRP for sending the PDCCH; or in other words, if the TRP corresponding to the random access procedure is the same as the TRP for sending the PDCCH, the random access procedure is the first-type random access procedure;
a random access procedure corresponding to a TAG that is the same as a TAG associated with the TCI state used for the PDCCH, where in other words, the TAG corresponding to the first-type random access procedure is the same as the TAG associated with the TCI state used for the PDCCH; or in other words, if the TAG corresponding to the random access procedure is the same as the TAG associated with the TCI state used for the PDCCH, the random access procedure is the first-type random access procedure; or
a random access procedure corresponding to a control channel group identifier that is the same as a control channel group identifier corresponding to the PDCCH, where in other words, the control channel group identifier corresponding to the first-type random access procedure is the same as the control channel group identifier corresponding to the PDCCH; or if the control channel group identifier corresponding to the random access procedure is the same as the control channel group identifier corresponding to the PDCCH, the random access procedure is the first-type random access procedure.

In another possible implementation, the second-type random access procedure includes: a random access procedure corresponding to a TRP that is different from a TRP for sending the PDCCH, where in other words, the TRP corresponding to the second-type random access procedure is the same as the TRP for sending the PDCCH; or in other words, if the TRP corresponding to the random access procedure is different from the TRP for sending the PDCCH, the random access procedure is the second-type random access procedure;
a random access procedure corresponding to a TAG that is different from a TAG associated with the TCI state used for the PDCCH, where in other words, the TAG corresponding to the second-type random access procedure is the same as the TAG associated with the TCI state used for the PDCCH; or in other words, if the TAG corresponding to the random access procedure is different from the TAG associated with the TCI state used for the PDCCH, the random access procedure is the second-type random access procedure; or
a random access procedure corresponding to a control channel group identifier that is different from a control channel group identifier corresponding to the PDCCH, where in other words, the control channel group identifier corresponding to the second-type random access procedure is different from the control channel group identifier corresponding to the PDCCH; or in other words, if the control channel group identifier corresponding to the random access procedure is different from the control channel group identifier corresponding to the PDCCH, the random access procedure is the second-type random access procedure.

In another possible implementation, the transceiver module 701 is further configured to receive a random access response from the network device, where the random access response includes a second field, and the second field indicates a TAG corresponding to a TA value carried in the random access response, where if the random access procedure is the first-type random access procedure, the TAG indicated by the second field is the same as the TAG associated with the TCI state used for the PDCCH; or if the random access procedure is the second-type random access procedure, the TAG indicated by the second field is different from the TAG associated with the TCI state used for the PDCCH.

In another possible implementation, the first field indicates to send the random access request based on the path loss corresponding to the first path loss resource, or indicates to send the random access request based on the path loss corresponding to the second path loss resource.

In another possible implementation, the transceiver module 701 is further configured to receive a random access response from the network device, where the random access response includes a second field, and the second field indicates a TAG corresponding to a TA value carried in the random access response, where if the first field indicates to send the random access request based on the path loss corresponding to the first path loss resource, the TAG indicated by the second field is the same as a TAG associated with the TCI state used for the PDCCH; or if the first field indicates to send the random access request based on the path loss corresponding to the second path loss resource, the TAG indicated by the second field is different from a TAG associated with the TCI state used for the PDCCH.

In another possible implementation, the first field indicates an SSB resource; and if a TAG associated with the SSB resource indicated by the first field is the same as a TAG associated with the TCI state used for the PDCCH, the random access request is sent based on the path loss corresponding to the first path loss resource; or if a TAG associated with the SSB resource indicated by the first field is different from a TAG associated with the TCI state used for the PDCCH, the random access request is sent based on the path loss corresponding to the second path loss resource.

In another possible implementation, the transceiver module 701 is further configured to receive a random access response from the network device, where the random access response includes a second field, and the second field indicates a TAG corresponding to a TA value carried in the random access response, where if the TAG associated with the SSB resource indicated by the first field is the same as the TAG associated with the TCI state used for the PDCCH, the TAG indicated by the second field is the same as the TAG associated with the TCI state used for the PDCCH; or if the TAG associated with the SSB resource indicated by the first field is different from the TAG associated with the TCI state used for the PDCCH, the TAG indicated by the second field is different from the TAG associated with the TCI state used for the PDCCH.

In another possible implementation, when a first condition is satisfied, the PDCCH includes the first information, where the first condition includes one or more of the following: Two TAGs are configured in a serving cell corresponding to the PDCCH; two control channel groups are configured in a serving cell corresponding to the PDCCH; or no associated additional cell is configured in a serving cell corresponding to the PDCCH.

In another possible implementation, when a second condition is satisfied, the first field indicates a TAG; the first field indicates whether a TAG corresponding to the random access procedure is the same as a TAG corresponding to the TCI state used for the PDCCH; the first field indicates a control channel group identifier; the first field indicates whether a control channel group identifier corresponding to the random access procedure is the same as a control channel group identifier corresponding to the PDCCH; the first field indicates that the random access procedure is a first-type random access procedure or a second-type random access procedure; or the first field indicates to send the random access request based on the path loss corresponding to the first path loss resource, or indicates to send the random access request based on the path loss corresponding to the second path loss resource, where the second condition includes one or more of the following: Two TAGs are configured in a serving cell corresponding to the PDCCH; two control channel groups are configured in a serving cell corresponding to the PDCCH; or no associated additional cell is configured in a serving cell corresponding to the PDCCH.

In another possible implementation, when a third condition is satisfied, the first field indicates that a cell corresponding to the random access procedure is a serving cell corresponding to the PDCCH, or indicates that the cell corresponding to the random access procedure is an activated additional cell associated with the serving cell, where the third condition includes at least one of the following: Two TAGs are configured in the serving cell corresponding to the PDCCH; two control channel groups are configured in the serving cell corresponding to the PDCCH; or an associated additional cell is configured in the serving cell corresponding to the PDCCH.

In another possible implementation, if the PDCCH is sent by using the serving cell corresponding to the PDCCH, and the first field indicates that the cell corresponding to the random access procedure is the serving cell, the random access request is sent based on the path loss corresponding to the first path loss resource; if the PDCCH is sent by using the serving cell corresponding to the PDCCH, and the first field indicates that the cell corresponding to the random access procedure is the activated additional cell associated with the serving cell, the random access request is sent based on the path loss corresponding to the second path loss resource; if the PDCCH is sent by using the activated additional cell associated with the serving cell corresponding to the PDCCH, and the first field indicates that the cell corresponding to the random access procedure is the serving cell corresponding to the PDCCH, the random access request is sent based on the path loss corresponding to the second path loss resource; or if the PDCCH is sent by using the activated additional cell associated with the serving cell corresponding to the PDCCH, and the first field indicates that the cell corresponding to the random access procedure is the activated additional cell associated with the serving cell corresponding to the PDCCH, the random access request is sent based on the path loss corresponding to the first path loss resource.

In another possible implementation, when a fourth condition is satisfied, the PDCCH includes the first field, where the fourth condition includes one or two of the following: Two TAGs are configured in the serving cell corresponding to the PDCCH; or two control channel groups are configured in the serving cell corresponding to the PDCCH.

In another possible implementation, a third field on the PDCCH indicates that the cell corresponding to the random access procedure is the serving cell corresponding to the PDCCH, or indicates that the cell corresponding to the random access procedure is the activated additional cell associated with the serving cell; and the random access response message includes one TA value; and if the cell corresponding to the random access procedure is the serving cell, the TA value is a TA value corresponding to a 1^{st} TAG in the serving cell; or if the cell corresponding to the random access procedure is the activated additional cell associated with the serving cell, the TA value is a TA value corresponding to a 2^{nd} TAG in the serving cell.

Optionally, the transceiver module 701 may include a sending module and a receiving module. The sending module is configured to perform the sending operation in the foregoing method embodiment. The receiving module is configured to perform the receiving operation in the foregoing method embodiment.

It needs to be noted that the communication apparatus 700 may include the sending module but not include the receiving module. Alternatively, the communication apparatus 700 may include the receiving module but not include the sending module. This may specifically depend on whether the foregoing solution performed by the communication apparatus 700 includes a sending action and a receiving action.

Optionally, the communication apparatus 700 is configured to perform the actions performed by the terminal device in the embodiment shown in FIG. 6. For details, refer to the related descriptions in the embodiment shown in FIG. 6. Details are not described herein.

It should be understood that a specific process in which the modules perform the foregoing corresponding process has been described in detail in the foregoing method embodiment. For brevity, details are not described herein again.

The processing module 702 in the foregoing embodiment may be implemented by at least one processor or a processor-related circuit. The transceiver module 701 may be implemented by a transceiver or a transceiverrelated circuit. The transceiver module 701 may also be referred to as a communication module or a communication interface. The storage module may be implemented by at least one memory.

FIG. 8 is a diagram of a structure of a communication apparatus according to an embodiment of this application. Refer to FIG. 8. The communication apparatus 800 may be configured to perform the processes performed by the network device in the embodiment shown in FIG. 6. For details, refer to the related descriptions in the foregoing method embodiment.

The communication apparatus 800 includes a transceiver module 801. Optionally, the communication apparatus 800 further includes a processing module 802.

The processing module 802 is configured to process data. The transceiver module 801 may implement a corresponding communication function. The transceiver module 801 may also be referred to as a communication interface or a communication module.

Optionally, the communication apparatus 800 may further include a storage module. The storage module may be configured to store instructions and/or data. The processing module 802 may read the instructions and/or the data in the storage module, to enable the communication apparatus to implement the foregoing method embodiment.

The communication apparatus 800 may be configured to perform the actions performed by the network device in the foregoing method embodiment. The communication apparatus 800 may be a network device or a component that may be configured in the network device. The processing module 802 is configured to perform the processing-related operation on the network device side in the foregoing method embodiment. The transceiver module 801 is configured to perform the receiving-related operation on the network device side in the foregoing method embodiment. For example, the communication apparatus 800 is configured to perform the following solution.

The transceiver module 801 is configured to: send a PDCCH to a terminal device, where the PDCCH is for triggering a random access procedure between the terminal device and the communication apparatus 800; and receive a random access request from the terminal device, where the random access request is sent based on a path loss corresponding to a first path loss resource or a path loss corresponding to a second path loss resource, where the path loss corresponding to the first path loss resource or the path loss corresponding to the second path loss resource is determined based on first information on the PDCCH, the first path loss resource is a QCL resource in a TCI state used for the PDCCH, and the second path loss resource is an SSB resource indicated on the PDCCH.

In a possible implementation, the first information is a first field on the PDCCH.

In another possible implementation, the first field indicates a TAG; and if the TAG indicated by the first field is the same as a TAG associated with the TCI state used for the PDCCH, the random access request is sent based on the path loss corresponding to the first path loss resource; or if the TAG indicated by the first field is different from a TAG associated with the TCI state used for the PDCCH, the random access request is sent based on the path loss corresponding to the second path loss resource.

In another possible implementation, the transceiver module 801 is further configured to send a random access response to the terminal device, where the random access response includes a second field, the second field indicates a TAG corresponding to a TA value carried in the random access response, and the TAG indicated by the second field is the same as the TAG indicated by the first field.

In another possible implementation, the first field indicates a control channel group identifier; and if the control channel group identifier indicated by the first field is the same as a control channel group identifier corresponding to the PDCCH, the random access request is sent based on the path loss corresponding to the first path loss resource; or if the control channel group identifier indicated by the first field is different from a control channel group identifier corresponding to the PDCCH, the random access request is sent based on the path loss corresponding to the second path loss resource.

In another possible implementation, the transceiver module 801 is further configured to send a random access response to the terminal device, where the random access response includes a second field, and the second field indicates a TAG corresponding to a TA value carried in the random access response message, where if the control channel group identifier indicated by the first field is the same as the control channel group identifier corresponding to the PDCCH, the TAG indicated by the second field is the same as a TAG associated with the TCI state used for the PDCCH; or if the control channel group identifier indicated by the first field is different from the control channel group identifier corresponding to the PDCCH, the TAG indicated by the second field is different from a TAG associated with the TCI state used for the PDCCH.

In another possible implementation, the first field indicates that the random access procedure is a first-type random access procedure or a second-type random access procedure; and if the random access procedure is the first-type random access procedure, the random access request is sent based on the path loss corresponding to the first path loss resource; or if the random access procedure is the second-type random access procedure, the random access request is sent based on the path loss corresponding to the second path loss resource.

In another possible implementation, the first-type random access procedure includes: a random access procedure corresponding to a TRP that is the same as a TRP for sending the PDCCH, where in other words, the TRP corresponding to the first-type random access procedure is the same as the TRP for sending the PDCCH; or in other words, if the TRP corresponding to the random access procedure is the same as the TRP for sending the PDCCH, the random access procedure is the first-type random access procedure;
a random access procedure corresponding to a TAG that is the same as a TAG associated with the TCI state used for the PDCCH, where in other words, the TAG corresponding to the first-type random access procedure is the same as the TAG associated with the TCI state used for the PDCCH; or in other words, if the TAG corresponding to the random access procedure is the same as the TAG associated with the TCI state used for the PDCCH, the random access procedure is the first-type random access procedure; or
a random access procedure corresponding to a control channel group identifier that is the same as a control channel group identifier corresponding to the PDCCH, where in other words, the control channel group identifier corresponding to the first-type random access procedure is the same as the control channel group identifier corresponding to the PDCCH; or if the control channel group identifier corresponding to the random access procedure is the same as the control channel group identifier corresponding to the PDCCH, the random access procedure is the first-type random access procedure.

In another possible implementation, the second-type random access procedure includes: a random access procedure corresponding to a TRP that is different from a TRP for sending the PDCCH, where in other words, the TRP corresponding to the second-type random access procedure is the same as the TRP for sending the PDCCH; or in other words, if the TRP corresponding to the random access procedure is different from the TRP for sending the PDCCH, the random access procedure is the second-type random access procedure;
a random access procedure corresponding to a TAG that is different from a TAG associated with the TCI state used for the PDCCH, where in other words, the TAG corresponding to the second-type random access procedure is the same as the TAG associated with the TCI state used for the PDCCH; or in other words, if the TAG corresponding to the random access procedure is different from the TAG associated with the TCI state used for the PDCCH, the random access procedure is the second-type random access procedure; or
a random access procedure corresponding to a control channel group identifier that is different from a control channel group identifier corresponding to the PDCCH, where in other words, the control channel group identifier corresponding to the second-type random access procedure is different from the control channel group identifier corresponding to the PDCCH; or in other words, if the control channel group identifier corresponding to the random access procedure is different from the control channel group identifier corresponding to the PDCCH, the random access procedure is the second-type random access procedure.

In another possible implementation, the transceiver module 801 is further configured to receive a random access response from the terminal device, where the random access response includes a second field, and the second field indicates a TAG corresponding to a TA value carried in the random access response, where if the random access procedure is the first-type random access procedure, the TAG indicated by the second field is the same as the TAG associated with the TCI state used for the PDCCH; or if the random access procedure is the second-type random access procedure, the TAG indicated by the second field is different from the TAG associated with the TCI state used for the PDCCH.

In another possible implementation, the first field indicates to send the random access request based on the path loss corresponding to the first path loss resource, or indicates to send the random access request based on the path loss corresponding to the second path loss resource.

In another possible implementation, the transceiver module 801 is further configured to send a random access response to the terminal device, where the random access response includes a second field, and the second field indicates a TAG corresponding to a TA value carried in the random access response, where if the first field indicates to send the random access request based on the path loss corresponding to the first path loss resource, the TAG indicated by the second field is the same as a TAG associated with the TCI state used for the PDCCH; or if the first field indicates to send the random access request based on the path loss corresponding to the second path loss resource, the TAG indicated by the second field is different from a TAG associated with the TCI state used for the PDCCH.

In another possible implementation, the first field indicates an SSB resource; and if a TAG associated with the SSB resource indicated by the first field is the same as a TAG associated with the TCI state used for the PDCCH, the random access request is sent based on the path loss corresponding to the first path loss resource; or if a TAG associated with the SSB resource indicated by the first field is different from a TAG associated with the TCI state used for the PDCCH, the random access request is sent based on the path loss corresponding to the second path loss resource.

In another possible implementation, the transceiver module 801 is further configured to send a random access response to the terminal device, where the random access response includes a second field, and the second field indicates a TAG corresponding to a TA value carried in the random access response, where if the TAG associated with the SSB resource indicated by the first field is the same as the TAG associated with the TCI state used for the PDCCH, the TAG indicated by the second field is the same as the TAG associated with the TCI state used for the PDCCH; or if the TAG associated with the SSB resource indicated by the first field is different from the TAG associated with the TCI state used for the PDCCH, the TAG indicated by the second field is different from the TAG associated with the TCI state used for the PDCCH.

In another possible implementation, when a first condition is satisfied, the PDCCH includes the first information, where the first condition includes one or more of the following: Two TAGs are configured in a serving cell corresponding to the PDCCH; two control channel groups are configured in a serving cell corresponding to the PDCCH; or no associated additional cell is configured in a serving cell corresponding to the PDCCH.

In another possible implementation, when a second condition is satisfied, the first field indicates a TAG; the first field indicates whether a TAG corresponding to the random access procedure is the same as a TAG corresponding to the TCI state used for the PDCCH; the first field indicates a control channel group identifier; the first field indicates whether a control channel group identifier corresponding to the random access procedure is the same as a control channel group identifier corresponding to the PDCCH; the first field indicates that the random access procedure is a first-type random access procedure or a second-type random access procedure; or the first field indicates to send the random access request based on the path loss corresponding to the first path loss resource, or indicates to send the random access request based on the path loss corresponding to the second path loss resource, where the second condition includes one or more of the following: Two TAGs are configured in a serving cell corresponding to the PDCCH; two control channel groups are configured in a serving cell corresponding to the PDCCH; or no associated additional cell is configured in a serving cell corresponding to the PDCCH.

In another possible implementation, when a third condition is satisfied, the first field indicates that a cell corresponding to the random access procedure is a serving cell corresponding to the PDCCH, or indicates that the cell corresponding to the random access procedure is an activated additional cell associated with the serving cell, where the third condition includes at least one of the following: Two TAGs are configured in the serving cell corresponding to the PDCCH; two control channel groups are configured in the serving cell corresponding to the PDCCH; or an associated additional cell is configured in the serving cell corresponding to the PDCCH.

In another possible implementation, if the PDCCH is sent by using the serving cell corresponding to the PDCCH, and the first field indicates that the cell corresponding to the random access procedure is the serving cell, the random access request is sent based on the path loss corresponding to the first path loss resource; if the PDCCH is sent by using the serving cell corresponding to the PDCCH, and the first field indicates that the cell corresponding to the random access procedure is the activated additional cell associated with the serving cell, the random access request is sent based on the path loss corresponding to the second path loss resource; if the PDCCH is sent by using the activated additional cell associated with the serving cell corresponding to the PDCCH, and the first field indicates that the cell corresponding to the random access procedure is the serving cell corresponding to the PDCCH, the random access request is sent based on the path loss corresponding to the second path loss resource; or if the PDCCH is sent by using the activated additional cell associated with the serving cell corresponding to the PDCCH, and the first field indicates that the cell corresponding to the random access procedure is the activated additional cell associated with the serving cell corresponding to the PDCCH, the random access request is sent based on the path loss corresponding to the first path loss resource.

In another possible implementation, when a fourth condition is satisfied, the PDCCH includes the first field, where the fourth condition includes one or two of the following: Two TAGs are configured in the serving cell corresponding to the PDCCH; or two control channel groups are configured in the serving cell corresponding to the PDCCH.

In another possible implementation, a third field on the PDCCH indicates that the cell corresponding to the random access procedure is the serving cell corresponding to the PDCCH, or indicates that the cell corresponding to the random access procedure is the activated additional cell associated with the serving cell; and the random access response message includes one TA value; and if the cell corresponding to the random access procedure is the serving cell, the TA value is a TA value corresponding to a 1^{st} TAG in the serving cell; or if the cell corresponding to the random access procedure is the activated additional cell associated with the serving cell, the TA value is a TA value corresponding to a 2^{nd} TAG in the serving cell.

Optionally, the transceiver module 801 may include a sending module and a receiving module. The sending module is configured to perform the sending operation in the foregoing method embodiment. The receiving module is configured to perform the receiving operation in the foregoing method embodiment.

It needs to be noted that the communication apparatus 800 may include the sending module but not include the receiving module. Alternatively, the communication apparatus 800 may include the receiving module but not include the sending module. This may specifically depend on whether the foregoing solution performed by the communication apparatus 800 includes a sending action and a receiving action.

Optionally, the communication apparatus 800 is configured to perform the actions performed by the network device in the embodiment shown in FIG. 6. For details, refer to the related descriptions in the embodiment shown in FIG. 6. Details are not described herein.

It should be understood that a specific process in which the modules perform the foregoing corresponding process has been described in detail in the foregoing method embodiment. For brevity, details are not described herein again.

The processing module 802 in the foregoing embodiment may be implemented by at least one processor or a processor-related circuit. The transceiver module 801 may be implemented by a transceiver or a transceiverrelated circuit. The transceiver module 801 may also be referred to as a communication module or a communication interface. The storage module may be implemented by at least one memory.

This application further provides a communication apparatus 900. The communication apparatus 900 may be a terminal device, a processor in the terminal device, or a chip. The communication apparatus 900 may be configured to perform the operations performed by the terminal device in the foregoing method embodiment.

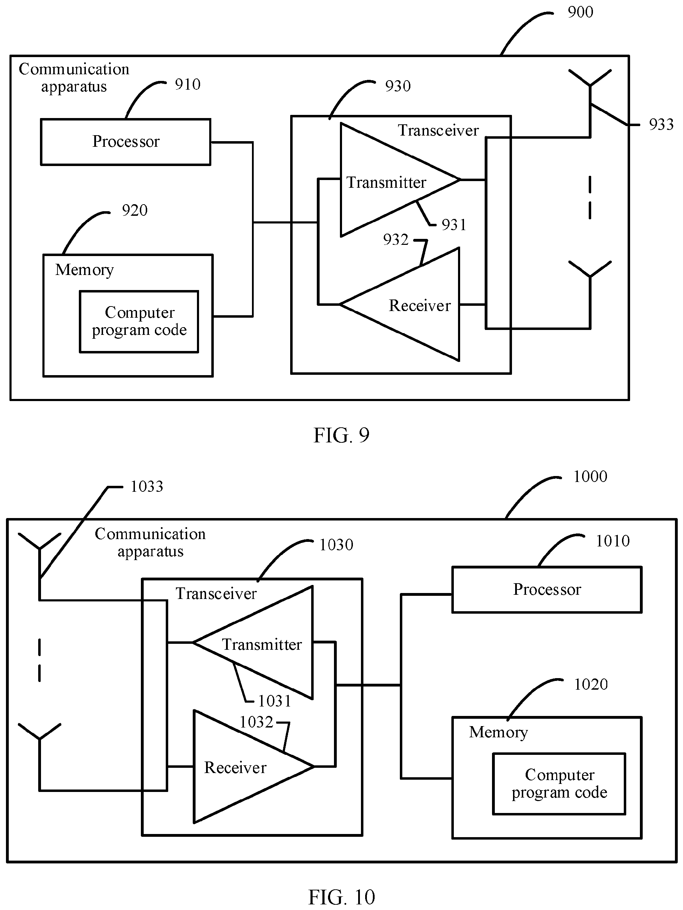

When the communication apparatus 900 is the terminal device, FIG. 9 is a simplified diagram of a structure of a terminal device. As shown in FIG. 9, the terminal device includes a processor, a memory, and a transceiver. The memory may store computer program code. The transceiver includes a transmitter 931, a receiver 932, a radio frequency circuit (not shown in the figure), an antenna 933, and an input/output apparatus (not shown in the figure).

The processor is mainly configured to: process a communication protocol and communication data, control the terminal device, execute a software program, process data of the software program, and so on.

The memory is mainly configured to store the software program and the data.

The radio frequency circuit is mainly configured to: perform conversion between a baseband signal and a radio frequency signal, and process the radio frequency signal.

The antenna is mainly configured to receive and send radio frequency signals in a form of electromagnetic waves.

The input/output apparatus may include a touchscreen, a display, a keyboard, or the like. The input/output apparatus is mainly configured to: receive data input by a user, and output data to the user. It should be noted that some types of terminal devices may have no input/output apparatus.

When data needs to be sent, the processor outputs the baseband signal to the radio frequency circuit after performing baseband processing on the to-be-sent data. Then, the radio frequency circuit performs radio frequency processing on the baseband signal, and then sends a radio frequency signal to the outside in a form of an electromagnetic wave through the antenna. When data is sent to the terminal device, the radio frequency circuit receives the radio frequency signal through the antenna. The radio frequency circuit converts the radio frequency signal into a baseband signal, and outputs the baseband signal to the processor. The processor converts the baseband signal into data, and processes the data. For ease of description, FIG. 9 shows only one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In embodiments of this application, the antenna and the radio frequency circuit that have a transceiver function may be considered as a transceiver module of the terminal device, and the processor that has a processing function may be considered as a processing module of the terminal device.

As shown in FIG. 9, the communication apparatus includes a processor 910, a memory 920, and a transceiver 930. The processor 910 may also be referred to as a processing unit, a processing board, a processing module, a processing apparatus, or the like. The transceiver 930 may also be referred to as a transceiver unit, a transceiver apparatus, or the like.

Optionally, a component configured to implement a receiving function in the transceiver 930 is considered as a receiving module, and a component configured to implement a sending function in the transceiver 930 is considered as a sending module. That is, the transceiver 930 includes a receiver and a transmitter. The transceiver may also be sometimes referred to as a transceiver module, a transceiver circuit, or the like. The receiver may also be sometimes referred to as a receiving module, a receiving circuit, or the like. The transmitter may also be sometimes referred to as a transmitting module, a transmitting circuit, or the like.

The processor 910 is configured to perform the processing action on the terminal device side in the embodiment shown in FIG. 6. The transceiver 930 is configured to perform the receiving and sending actions on the terminal device side in the embodiment shown in FIG. 6.

It should be understood that FIG. 9 is merely an example rather than a limitation. The terminal device including the transceiver module and the processing module may not depend on the structure shown in FIG. 7 or FIG. 9.

When the communication apparatus 900 is the chip, the chip includes a processor, a memory, and a transceiver. The transceiver may be an input/output circuit or a communication interface. The processor may be a processing module, a microprocessor, or an integrated circuit integrated on the chip. The sending operation of the terminal device in the foregoing method embodiment may be understood as an output of the chip, and the receiving operation of the terminal device in the foregoing method embodiment may be understood as an input of the chip.

This application further provides a communication apparatus 1000. The communication apparatus 1000 may be a network device or a chip. The communication apparatus 1000 may be configured to perform the operations performed by the network device in the embodiment shown in FIG. 6.

When the communication apparatus 1000 is the network device, for example, a base station, FIG. 10 is a simplified diagram of a structure of a base station. The base station includes a part 1010, a part 1020, and a part 1030.

The part 1010 is mainly configured to: perform baseband processing, control the base station, and so on. The part 1010 is usually a control center of the base station, may be usually referred to as a processor, and is configured to control the base station to perform the processing operation on the network device side in the foregoing method embodiment.

The part 1020 is mainly configured to store computer program code and data.

The part 1030 is mainly configured to: receive and send radio frequency signals, and perform conversion between the radio frequency signal and a baseband signal. The part 1030 may be usually referred to as a transceiver module, a transceiver, a transceiver circuit, or the like. The transceiver module in the part 1030 may also be referred to as a transceiver or the like, and includes an antenna 1033 and a radio frequency circuit (not shown in the figure). The radio frequency circuit is mainly configured to perform radio frequency processing. Optionally, in the part 1030, a component configured to implement a receiving function may be considered as a receiver, and a component configured to implement a sending function may be considered as a transmitter. That is, the part 1030 includes a receiver 1032 and a transmitter 1031. The receiver may also be referred to as a receiving module, a receiving circuit, or the like, and the transmitter machine may be referred to as a transmitting module, a transmitting circuit, or the like.

The part 1010 and the part 1020 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, a plurality of boards may alternatively share one or more processors, a plurality of boards share one or more memories, or a plurality of boards simultaneously share one or more processors.

For example, in an implementation, the transceiver module in the part 1030 is configured to perform the processes related to receiving and sending performed by the network device in the embodiment shown in FIG. 6. The processor in the part 1010 is configured to perform the processing-related process performed by the network device in the embodiment shown in FIG. 6.

It should be understood that FIG. 10 is merely an example rather than a limitation, and the network device including the processor, the memory, and the transceiver may not depend on the structure shown in FIG. 8 or FIG. 10.

When the communication apparatus 1000 is the chip, the chip includes a transceiver, a memory, and a processor. The transceiver may be an input/output circuit or a communication interface. The processor is a processor, a microprocessor, or an integrated circuit integrated on the chip. The sending operation of the network device in the foregoing method embodiment may be understood as an output of the chip, and the receiving operation of the network device in the foregoing method embodiment may be understood as an input of the chip.

An embodiment of this application further provides a computer-readable storage medium. The computer-readable storage medium stores computer instructions for implementing the method performed by the terminal device or the network device in the foregoing method embodiment.

For example, when a computer program is executed by a computer, the computer is enabled to implement the method performed by the terminal device or the network device in the foregoing method embodiment.

An embodiment of this application further provides a computer program product including instructions. When the instructions are executed by a computer, the computer is enabled to implement the method performed by the terminal device or the network device in the foregoing method embodiment.

An embodiment of this application further provides a communication system. The communication system includes the terminal device in the foregoing embodiment and the network device in the foregoing embodiment. The terminal device is configured to perform a part or all of the operations performed by the terminal device in the foregoing method embodiment, and the network device is configured to perform a part or all of the operations of the network device in the foregoing method embodiment.

An embodiment of this application further provides a chip apparatus, including a processor, configured to invoke a computer program or computer instructions stored in a memory, to enable the processor to perform the method provided in the embodiment shown in FIG. 6.

In a possible implementation, an input of the chip apparatus corresponds to a receiving operation in any embodiment in the embodiment shown in FIG. 6, and an output of the chip apparatus corresponds to a sending operation in any embodiment in the embodiment shown in FIG. 6.

Optionally, the processor is coupled to the memory through an interface.

Optionally, the chip apparatus further includes the memory, and the memory stores the computer program or the computer instructions.

The processor mentioned anywhere above may be a general-purpose central processing unit, a microprocessor, an application-specific integrated circuit (application-specific integrated circuit, ASIC), or one or more integrated circuits for controlling program execution of the method provided in any embodiment in the embodiment shown in FIG. 6. The memory mentioned anywhere above may be a read-only memory (read-only memory, ROM), another type of static storage device that can store static information and instructions, a random access memory (random access memory, RAM), or the like.

It may be clearly understood by persons skilled in the art that for convenience and brevity of description, for all explanations and beneficial effects of related content in any one of the apparatuses provided above, refer to the corresponding method embodiment provided above. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division. During actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one location, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in this application essentially, the part contributing, or all or some of the technical solutions may be implemented in a form of a software product. The computer software product is stored in a storage medium, and includes several instructions for enabling a computer device (which may be a personal computer, a server, a network device, or the like) to perform all or some steps of the methods in embodiments of this application. The foregoing storage medium includes any medium that can store program code, for example, a USB flash drive, a removable hard disk, a ROM, a RAM, a magnetic disk, or an optical disc.

In conclusion, the foregoing embodiments are merely for describing the technical solutions in this application, but not for limiting this application. Although this application is described in detail with reference to the foregoing embodiments, persons of ordinary skill in the art should understand that they may still make modifications to the technical solutions recorded in the foregoing embodiments, or make equivalent replacements to some technical features thereof. However, these modifications or replacements do not make the essence of the corresponding technical solutions depart from the scope of the technical solutions in embodiments of this application.

## Claims

1. A random access method, applied to a terminal device, wherein the method comprises:
receiving a physical downlink control channel PDCCH, wherein the PDCCH is for triggering a random access procedure between the terminal device and a network device;
determining, based on first information on the PDCCH, a path loss corresponding to a first path loss resource or a path loss corresponding to a second path loss resource, wherein the first path loss resource is a quasi-colocation QCL resource in a transmission configuration indicator TCI state used for the PDCCH, and the second path loss resource is a synchronization signal block SSB resource indicated on the PDCCH; and
sending the random access request based on the path loss corresponding to the first path loss resource or the path loss corresponding to the second path loss resource.

2. A random access method, applied to a network device, wherein the method comprises:
sending a downlink control channel PDCCH, wherein the PDCCH is for triggering a random access procedure between a terminal device and the network device; and
receiving a random access request, wherein the random access request is sent based on a path loss corresponding to a first path loss resource or a path loss corresponding to a second path loss resource, wherein the path loss corresponding to the first path loss resource or the path loss corresponding to the second path loss resource is determined based on first information on the PDCCH, the first path loss resource is a quasi-colocation QCL resource in a transmission configuration indicator TCI state used for the PDCCH, and the second path loss resource is a synchronization signal block SSB resource indicated on the PDCCH.

3. The method according to claim 1 or 2, wherein the first information is a first field on the PDCCH.

4. The method according to claim 3, wherein the first field indicates a timing advance group TAG; and
if the TAG indicated by the first field is the same as a TAG associated with the TCI state used for the PDCCH, the random access request is sent based on the path loss corresponding to the first path loss resource; or
if the TAG indicated by the first field is different from a TAG associated with the TCI state used for the PDCCH, the random access request is sent based on the path loss corresponding to the second path loss resource.

5. The method according to claim 4, wherein the method further comprises:
receiving a random access response, wherein the random access response comprises a second field, the second field indicates a TAG corresponding to a timing advance TA carried in the random access response, and the TAG indicated by the second field is the same as the TAG indicated by the first field.

6. The method according to claim 3, wherein the first field indicates a control channel group identifier; and
if the control channel group identifier indicated by the first field is the same as a control channel group identifier corresponding to the PDCCH, the random access request is sent based on the path loss corresponding to the first path loss resource; or
if the control channel group identifier indicated by the first field is different from a control channel group identifier corresponding to the PDCCH, the random access request is sent based on the path loss corresponding to the second path loss resource.

7. The method according to claim 6, wherein the method further comprises:
receiving a random access response, wherein the random access response comprises a second field, and the second field indicates a TAG corresponding to a timing advance TA carried in the random access response message, wherein
if the control channel group identifier indicated by the first field is the same as the control channel group identifier corresponding to the PDCCH, the TAG indicated by the second field is the same as a TAG associated with the TCI state used for the PDCCH; or
if the control channel group identifier indicated by the first field is different from the control channel group identifier corresponding to the PDCCH, the TAG indicated by the second field is different from a TAG associated with the TCI state used for the PDCCH.

8. The method according to claim 3, wherein the first field indicates that the random access procedure is a first-type random access procedure or a second-type random access procedure; and
if the random access procedure is the first-type random access procedure, the random access request is sent based on the path loss corresponding to the first path loss resource; or
if the random access procedure is the second-type random access procedure, the random access request is sent based on the path loss corresponding to the second path loss resource.

9. The method according to claim 8, wherein the first-type random access procedure comprises: a random access procedure corresponding to a transmission and reception point TRP that is the same as a TRP for sending the PDCCH;
a random access procedure corresponding to a TAG that is the same as a TAG associated with the TCI state used for the PDCCH; or
a random access procedure corresponding to a control channel group identifier that is the same as a control channel group identifier corresponding to the PDCCH.

10. The method according to claim 8, wherein the second-type random access procedure comprises: a random access procedure corresponding to a transmission and reception point TRP that is different from a TRP for sending the PDCCH;
a random access procedure corresponding to a TAG that is different from a TAG associated with the TCI state used for the PDCCH; or
a random access procedure corresponding to a control channel group identifier that is different from a control channel group identifier corresponding to the PDCCH.

11. The method according to any one of claims 8 to 10, wherein the method further comprises:
receiving a random access response, wherein the random access response comprises a second field, and the second field indicates a TAG corresponding to a timing advance TA carried in the random access response, wherein
if the random access procedure is the first-type random access procedure, the TAG indicated by the second field is the same as the TAG associated with the TCI state used for the PDCCH; or
if the random access procedure is the second-type random access procedure, the TAG indicated by the second field is different from the TAG associated with the TCI state used for the PDCCH.

12. The method according to claim 3, wherein the first field indicates to send the random access request based on the path loss corresponding to the first path loss resource, or indicates to send the random access request based on the path loss corresponding to the second path loss resource.

13. The method according to claim 12, wherein the method further comprises:
receiving a random access response, wherein the random access response comprises a second field, and the second field indicates a TAG corresponding to a timing advance TA carried in the random access response, wherein
if the first field indicates to send the random access request based on the path loss corresponding to the first path loss resource, the TAG indicated by the second field is the same as a TAG associated with the TCI state used for the PDCCH; or
if the first field indicates to send the random access request based on the path loss corresponding to the second path loss resource, the TAG indicated by the second field is different from a TAG associated with the TCI state used for the PDCCH.

14. The method according to claim 3, wherein the first field indicates an SSB resource; and
if a TAG associated with the SSB resource indicated by the first field is the same as a TAG associated with the TCI state used for the PDCCH, the random access request is sent based on the path loss corresponding to the first path loss resource; or
if a TAG associated with the SSB resource indicated by the first field is different from a TAG associated with the TCI state used for the PDCCH, the random access request is sent based on the path loss corresponding to the second path loss resource.

15. The method according to claim 14, wherein the method further comprises:
receiving a random access response, wherein the random access response comprises a second field, and the second field indicates a TAG corresponding to a timing advance TA carried in the random access response, wherein
if the TAG associated with the SSB resource indicated by the first field is the same as the TAG associated with the TCI state used for the PDCCH, the TAG indicated by the second field is the same as the TAG associated with the TCI state used for the PDCCH; or
if the TAG associated with the SSB resource indicated by the first field is different from the TAG associated with the TCI state used for the PDCCH, the TAG indicated by the second field is different from the TAG associated with the TCI state used for the PDCCH.

16. The method according to any one of claims 4 to 15, wherein when a first condition is satisfied, the PDCCH comprises the first information, wherein the first condition comprises one or more of the following:
two TAGs are configured in a serving cell corresponding to the PDCCH;
two control channel groups are configured in a serving cell corresponding to the PDCCH; or
no associated additional cell is configured in a serving cell corresponding to the PDCCH.

17. The method according to claim 3, wherein when a second condition is satisfied, the first field indicates a TAG; the first field indicates whether a TAG corresponding to the random access procedure is the same as a TAG corresponding to the TCI state used for the PDCCH; the first field indicates a control channel group identifier; the first field indicates whether a control channel group identifier corresponding to the random access procedure is the same as a control channel group identifier corresponding to the PDCCH; the first field indicates that the random access procedure is a first-type random access procedure or a second-type random access procedure; or the first field indicates to send the random access request based on the path loss corresponding to the first path loss resource, or indicates to send the random access request based on the path loss corresponding to the second path loss resource, wherein the second condition comprises one or more of the following:
two TAGs are configured in a serving cell corresponding to the PDCCH;
two control channel groups are configured in a serving cell corresponding to the PDCCH; or
no associated additional cell is configured in a serving cell corresponding to the PDCCH.

18. The method according to claim 3, wherein when a third condition is satisfied, the first field indicates that a cell corresponding to the random access procedure is a serving cell corresponding to the PDCCH, or indicates that the cell corresponding to the random access procedure is an activated additional cell associated with the serving cell, wherein the third condition comprises at least one of the following:
two TAGs are configured in the serving cell corresponding to the PDCCH;
two control channel groups are configured in the serving cell corresponding to the PDCCH; or
an associated additional cell is configured in the serving cell corresponding to the PDCCH.

19. The method according to claim 18, wherein if the PDCCH is sent by using the serving cell corresponding to the PDCCH, and the first field indicates that the cell corresponding to the random access procedure is the serving cell, the random access request is sent based on the path loss corresponding to the first path loss resource;
if the PDCCH is sent by using the serving cell corresponding to the PDCCH, and the first field indicates that the cell corresponding to the random access procedure is the activated additional cell associated with the serving cell, the random access request is sent based on the path loss corresponding to the second path loss resource;
if the PDCCH is sent by using the activated additional cell associated with the serving cell corresponding to the PDCCH, and the first field indicates that the cell corresponding to the random access procedure is the serving cell, the random access request is sent based on the path loss corresponding to the second path loss resource; or
if the PDCCH is sent by using the activated additional cell associated with the serving cell corresponding to the PDCCH, and the first field indicates that the cell corresponding to the random access procedure is the activated additional cell associated with the serving cell, the random access request is sent based on the path loss corresponding to the first path loss resource.

20. The method according to any one of claims 17 to 19, wherein when a fourth condition is satisfied, the PDCCH comprises the first field, wherein the fourth condition comprises one or two of the following:
two TAGs are configured in the serving cell corresponding to the PDCCH; or
two control channel groups are configured in the serving cell corresponding to the PDCCH.

21. The method according to any one of claims 1 to 20, wherein a third field on the PDCCH indicates that the cell corresponding to the random access procedure is the serving cell corresponding to the PDCCH, or indicates that the cell corresponding to the random access procedure is the activated additional cell associated with the serving cell; and the random access response message comprises one TA value; and
if the cell corresponding to the random access procedure is the serving cell, the TA value is a TA value corresponding to a 1^{st} TAG in the serving cell; or
if the cell corresponding to the random access procedure is the activated additional cell associated with the serving cell, the TA value is a TA value corresponding to a 2^{nd} TAG in the serving cell.

22. A first communication apparatus, comprising a transceiver module and a processing module, wherein
the transceiver module is configured to receive a physical downlink control channel PDCCH, wherein the PDCCH is for triggering a random access procedure between the first communication apparatus and a second communication apparatus;
the processing module is configured to determine, based on first information on the PDCCH, a path loss corresponding to a first path loss resource or a path loss corresponding to a second path loss resource, wherein the first path loss resource is a quasi-colocation QCL resource in a transmission configuration indicator TCI state used for the PDCCH, and the second path loss resource is a synchronization signal block SSB resource indicated on the PDCCH; and
the transceiver module is further configured to send the random access request based on the path loss corresponding to the first path loss resource or the path loss corresponding to the second path loss resource.

23. A second communication apparatus, comprising a transceiver module, wherein
the transceiver module is configured to: send a downlink control channel PDCCH, wherein the PDCCH is for triggering a random access procedure between a first communication apparatus and the second communication apparatus; and receive a random access request, wherein the random access request is sent based on a path loss corresponding to a first path loss resource or a path loss corresponding to a second path loss resource, wherein the path loss corresponding to the first path loss resource or the path loss corresponding to the second path loss resource is determined based on first information on the PDCCH, the first path loss resource is a quasi-colocation QCL resource in a transmission configuration indicator TCI state used for the PDCCH, and the second path loss resource is a synchronization signal block SSB resource indicated on the PDCCH.

24. The first communication apparatus according to claim 22 or the second communication apparatus according to claim 23, wherein the first information is a first field on the PDCCH.

25. The first communication apparatus or the second communication apparatus according to claim 24, wherein the first field indicates a timing advance group TAG; and
if the TAG indicated by the first field is the same as a TAG associated with the TCI state used for the PDCCH, the random access request is sent based on the path loss corresponding to the first path loss resource; or
if the TAG indicated by the first field is different from a TAG associated with the TCI state used for the PDCCH, the random access request is sent based on the path loss corresponding to the second path loss resource.

26. The first communication apparatus according to claim 25, wherein the transceiver module is further configured to:
receive a random access response, wherein the random access response comprises a second field, the second field indicates a TAG corresponding to a timing advance TA carried in the random access response, and the TAG indicated by the second field is the same as the TAG indicated by the first field.

27. The first communication apparatus or the second communication apparatus according to claim 24, wherein the first field indicates a control channel group identifier; and
if the control channel group identifier indicated by the first field is the same as a control channel group identifier corresponding to the PDCCH, the random access request is sent based on the path loss corresponding to the first path loss resource; or
if the control channel group identifier indicated by the first field is different from a control channel group identifier corresponding to the PDCCH, the random access request is sent based on the path loss corresponding to the second path loss resource.

28. The first communication apparatus according to claim 27, wherein the transceiver module is further configured to:
receive a random access response, wherein the random access response comprises a second field, and the second field indicates a TAG corresponding to a timing advance TA carried in the random access response message, wherein
if the control channel group identifier indicated by the first field is the same as the control channel group identifier corresponding to the PDCCH, the TAG indicated by the second field is the same as a TAG associated with the TCI state used for the PDCCH; or
if the control channel group identifier indicated by the first field is different from the control channel group identifier corresponding to the PDCCH, the TAG indicated by the second field is different from a TAG associated with the TCI state used for the PDCCH.

29. The first communication apparatus or the second communication apparatus according to claim 24, wherein the first field indicates that the random access procedure is a first-type random access procedure or a second-type random access procedure; and
if the random access procedure is the first-type random access procedure, the random access request is sent based on the path loss corresponding to the first path loss resource; or
if the random access procedure is the second-type random access procedure, the random access request is sent based on the path loss corresponding to the second path loss resource.

30. The first communication apparatus or the second communication apparatus according to claim 29, wherein the first-type random access procedure comprises: a random access procedure corresponding to a transmission and reception point TRP that is the same as a TRP for sending the PDCCH;
a random access procedure corresponding to a TAG that is the same as a TAG associated with the TCI state used for the PDCCH; or
a random access procedure corresponding to a control channel group identifier that is the same as a control channel group identifier corresponding to the PDCCH.

31. The first communication apparatus or the second communication apparatus according to claim 29, wherein the second-type random access procedure comprises: a random access procedure corresponding to a transmission and reception point TRP that is different from a TRP for sending the PDCCH;
a random access procedure corresponding to a TAG that is different from a TAG associated with the TCI state used for the PDCCH; or
a random access procedure corresponding to a control channel group identifier that is different from a control channel group identifier corresponding to the PDCCH.

32. The first communication apparatus according to any one of claims 29 to 31, wherein the transceiver module is further configured to:
receive a random access response, wherein the random access response comprises a second field, and the second field indicates a TAG corresponding to a timing advance TA carried in the random access response, wherein
if the random access procedure is the first-type random access procedure, the TAG indicated by the second field is the same as the TAG associated with the TCI state used for the PDCCH; or
if the random access procedure is the second-type random access procedure, the TAG indicated by the second field is different from the TAG associated with the TCI state used for the PDCCH.

33. The first communication apparatus or the second communication apparatus according to claim 24, wherein the first field indicates to send the random access request based on the path loss corresponding to the first path loss resource, or indicates to send the random access request based on the path loss corresponding to the second path loss resource.

34. The first communication apparatus according to claim 33, wherein the transceiver module is further configured to:
receive a random access response, wherein the random access response comprises a second field, and the second field indicates a TAG corresponding to a timing advance TA carried in the random access response, wherein
if the first field indicates to send the random access request based on the path loss corresponding to the first path loss resource, the TAG indicated by the second field is the same as a TAG associated with the TCI state used for the PDCCH; or
if the first field indicates to send the random access request based on the path loss corresponding to the second path loss resource, the TAG indicated by the second field is different from a TAG associated with the TCI state used for the PDCCH.

35. The first communication apparatus or the second communication apparatus according to claim 24, wherein the first field indicates an SSB resource; and
if a TAG associated with the SSB resource indicated by the first field is the same as a TAG associated with the TCI state used for the PDCCH, the random access request is sent based on the path loss corresponding to the first path loss resource; or
if a TAG associated with the SSB resource indicated by the first field is different from a TAG associated with the TCI state used for the PDCCH, the random access request is sent based on the path loss corresponding to the second path loss resource.

36. The first communication apparatus according to claim 35, wherein the transceiver module is further configured to:
receive a random access response, wherein the random access response comprises a second field, and the second field indicates a TAG corresponding to a timing advance TA carried in the random access response, wherein
if the TAG associated with the SSB resource indicated by the first field is the same as the TAG associated with the TCI state used for the PDCCH, the TAG indicated by the second field is the same as the TAG associated with the TCI state used for the PDCCH; or
if the TAG associated with the SSB resource indicated by the first field is different from the TAG associated with the TCI state used for the PDCCH, the TAG indicated by the second field is different from the TAG associated with the TCI state used for the PDCCH.

37. The first communication apparatus or the second communication apparatus according to any one of claims 25 to 36, wherein when a first condition is satisfied, the PDCCH comprises the first information, wherein the first condition comprises one or more of the following:
two TAGs are configured in a serving cell corresponding to the PDCCH;
two control channel groups are configured in a serving cell corresponding to the PDCCH; or
no associated additional cell is configured in a serving cell corresponding to the PDCCH.

38. The first communication apparatus or the second communication apparatus according to claim 24, wherein when a second condition is satisfied, the first field indicates a TAG; the first field indicates whether a TAG corresponding to the random access procedure is the same as a TAG corresponding to the TCI state used for the PDCCH; the first field indicates a control channel group identifier; the first field indicates whether a control channel group identifier corresponding to the random access procedure is the same as a control channel group identifier corresponding to the PDCCH; the first field indicates that the random access procedure is a first-type random access procedure or a second-type random access procedure; or the first field indicates to send the random access request based on the path loss corresponding to the first path loss resource, or indicates to send the random access request based on the path loss corresponding to the second path loss resource, wherein the second condition comprises one or more of the following:
two TAGs are configured in a serving cell corresponding to the PDCCH;
two control channel groups are configured in a serving cell corresponding to the PDCCH; or
no associated additional cell is configured in a serving cell corresponding to the PDCCH.

39. The first communication apparatus or the second communication apparatus according to claim 24, wherein when a third condition is satisfied, the first field indicates that a cell corresponding to the random access procedure is a serving cell corresponding to the PDCCH, or indicates that the cell corresponding to the random access procedure is an activated additional cell associated with the serving cell, wherein the third condition comprises at least one of the following:
two TAGs are configured in the serving cell corresponding to the PDCCH;
two control channel groups are configured in the serving cell corresponding to the PDCCH; or
an associated additional cell is configured in the serving cell corresponding to the PDCCH.

40. The first communication apparatus or the second communication apparatus according to claim 39, wherein if the PDCCH is sent by using the serving cell corresponding to the PDCCH, and the first field indicates that the cell corresponding to the random access procedure is the serving cell, the random access request is sent based on the path loss corresponding to the first path loss resource;
if the PDCCH is sent by using the serving cell corresponding to the PDCCH, and the first field indicates that the cell corresponding to the random access procedure is the activated additional cell associated with the serving cell, the random access request is sent based on the path loss corresponding to the second path loss resource;
if the PDCCH is sent by using the activated additional cell associated with the serving cell corresponding to the PDCCH, and the first field indicates that the cell corresponding to the random access procedure is the serving cell, the random access request is sent based on the path loss corresponding to the second path loss resource; or
if the PDCCH is sent by using the activated additional cell associated with the serving cell corresponding to the PDCCH, and the first field indicates that the cell corresponding to the random access procedure is the activated additional cell associated with the serving cell, the random access request is sent based on the path loss corresponding to the first path loss resource.

41. The first communication apparatus or the second communication apparatus according to any one of claims 38 to 40, wherein when a fourth condition is satisfied, the PDCCH comprises the first field, wherein the fourth condition comprises one or two of the following:
two TAGs are configured in the serving cell corresponding to the PDCCH; or
two control channel groups are configured in the serving cell corresponding to the PDCCH.

42. The first communication apparatus or the second communication apparatus according to any one of claims 22 to 41, wherein a third field on the PDCCH indicates that the cell corresponding to the random access procedure is the serving cell corresponding to the PDCCH, or indicates that the cell corresponding to the random access procedure is the activated additional cell associated with the serving cell; and the random access response message comprises one TA value; and
if the cell corresponding to the random access procedure is the serving cell, the TA value is a TA value corresponding to a 1^{st} TAG in the serving cell; or
if the cell corresponding to the random access procedure is the activated additional cell associated with the serving cell, the TA value is a TA value corresponding to a 2^{nd} TAG in the serving cell.

43. A communication apparatus, wherein the communication apparatus comprises a processor, and the processor is configured to execute a computer program or computer instructions in a memory, to perform the method according to any one of claims 1 to 21.

44. A computer-readable storage medium, wherein the computer-readable storage medium stores a computer program; and when the computer program is executed by a communication apparatus, the communication apparatus is caused to perform the method according to any one of claims 1 to 21.

45. A communication system, wherein the communication system comprises a terminal device and a network device, wherein
the terminal device is configured to perform the method according to any one of claims 1 to 21, and the network device is configured to perform the method according to any one of claims 2 to 4, 6, 8 to 10, 12, 14, and 16 to 21.

46. A computer program product, wherein when the computer program product runs on a computer, the computer is caused to perform the method according to any one of claims 1 to 21.
